# EUROPÄISCHE PATENTSCHRIFT

(11) **EP 3 742 680 B1**
(45) Veröffentlichungstag und Bekanntmachung des Hinweises auf die Patenterteilung: **16.03.2022**
(21) Anmeldenummer: 19175857.2
(22) Anmeldetag: 22.05.2019
(51) Int. Cl.: H04L 12/40

(54) **VERTEILERVORRICHTUNG UND ENTSPRECHENDES VERFAHREN**
ADJUSTMENT DEVICE AND CORRESPONDING METHOD
DISPOSITIF DISTRIBUTEUR ET PROCÉDÉ CORRESPONDANT

(43) Veröffentlichungstag der Anmeldung: 25.11.2020
(73) Patentinhaber: Lisa Dräxlmaier GmbH, 84137 Vilsbiburg (DE)
(72) Erfinder: Egenhofer, Ulrich, 84036 Landshut (DE); Wortberg, Michael, 84405 Dorfen (DE)

(56) Entgegenhaltungen:
- EP-A1- 1 734 700
- WO-A1-03/081847
- WO-A1-2018/065016
- US-A1- 2010 254 392

## Beschreibung

### Technisches Gebiet

Die vorliegende Erfindung betrifft eine Verteilervorrichtung für ein Datennetzwerk. Ferner betrifft die vorliegende Erfindung ein entsprechendes Verfahren.

### Stand der Technik

Die vorliegende Erfindung wird im Folgenden hauptsächlich in Verbindung mit Bussystemen in Fahrzeugen beschrieben. Es versteht sich, dass die vorliegende Erfindung auch in Bussystemen außerhalb von Fahrzeugen angewendet werden kann.

In modernen Fahrzeugen werden in zunehmendem Umfang elektrische und elektronische Systeme eingesetzt, welche den Fahrer z.B. beim Führen des Fahrzeugs unterstützen oder das Fahrzeug autonom führen können. In solchen Fahrzeugen wird daher eine Vielzahl von Steuergeräten eingesetzt, welche üblicherweise über digitale Bussysteme zur Datenkommunikation vernetzt sind.

Insbesondere Systeme, die das Fahrzeug autonom führen bzw. dem Fahrer zumindest zeitweise Steueraufgaben abnehmen, weisen erhöhte Sicherheitsanforderungen auf. So muss das Fahrzeug bei Ausfall eines Systems, welches das Fahrzeug autonom führt, z.B. in einen sicheren Zustand überführt werden, der nicht zu einem Unfall führt. Bei solchen sicherheitskritischen Systemen wird auch von FuSi-Systemen oder Komponenten gesprochen (FuSi = funktionale Sicherheit). Systeme, welche nicht als sicherheitskritisch eingestuft werden, können auch als QM-Systeme oder QM-Komponenten bezeichnet werden (QM - quality management).

Im Fahrzeug ist sicherzustellen, dass QM-Systeme die Funktion von FuSi-Systemen nicht beeinflussen können. Dies schränkt die Gestaltungsmöglichkeiten beim Entwurf von Fahrzeugbordnetzen stark ein. Beispielsweise kann bei dem weit verbreiteten CAN-Bus ein defekter Teilnehmer in einem CAN-Bus mit Linientopologie oder Stern-Teilbus-Topologie die Kommunikation für alle anderen Teilnehmer stören. Folglich können bei einem solchen CAN-Bus QM-Systeme und FuSi-Systeme nicht auf einem gemeinsamen Bus betrieben werden. Eine Kabeleinsparung durch die Benutzung eines gemeinsamen Mediums ist auf Grund der Abhängigkeiten im Fehlerfall nicht möglich.

Ferner sind bei der Gestaltung eines Bordnetzes auch physikalische Gegebenheiten zu berücksichtigen. So führen z.B. Splice-Stellen oder Sternpunkte zu einem Impedanzsprung der Datenleitung und verschlechtern damit die Signalqualität. Dies ist insbesondere bei Datenübertragungen mit hohen oder auch flexiblen Datenraten, wie in CAN-FD Systemen, kritisch.

Die WO 2018 / 065 016 A1 offenbart eine Kommunikationsdaten-Authentifizierungsvorrichtung für ein Fahrzeug.

### Beschreibung der Erfindung

Eine Aufgabe der Erfindung ist es daher, unter Einsatz konstruktiv möglichst einfacher Mittel ein verbessertes Bordnetz für Fahrzeuge bereitzustellen.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben. Insbesondere können die unabhängigen Ansprüche einer Anspruchskategorie auch analog zu den abhängigen Ansprüchen einer anderen Anspruchskategorie weitergebildet sein.

Eine erfindungsgemäße Verteilervorrichtung für ein Datennetzwerk in einem Fahrzeug weist auf: eine Anzahl, also eine oder mehrere, erster Kommunikationsschnittstellen, welche mit Kommunikationspartnern einer ersten Priorität koppelbar sind, eine Anzahl, also eine oder mehrere, zweiter Kommunikationsschnittstellen, welche mit Kommunikationspartnern einer zweiten Priorität koppelbar sind, wobei die zweite Priorität niedriger ist, als die erste Priorität, eine Koppeleinrichtung, welche ausgebildet ist, die ersten Kommunikationsschnittstellen und die zweiten Kommunikationsschnittstellen kommunikativ derartig miteinander zu koppeln, dass die Kommunikationsteilnehmer die Anwesenheit der Verteilervorrichtung im Normalbetrieb nicht wahrnehmen, und eine Überwachungseinrichtung, welche ausgebildet ist, die Kommunikation über die zweiten Kommunikationsschnittstellen zu überwachen und bei Auftreten eines Kommunikationsfehlers an einer der zweiten Kommunikationsschnittstellen zumindest die ersten Kommunikationsschnittstellen von der entsprechenden zweiten Kommunikationsschnittstelle kommunikativ zu trennen, also z.B. zu isolieren, bzw. die fehlerbehafteten Kommunikationsschnittstellen von den fehlerfreien Kommunikationsschnittstellen kommunikativ zu trennen, sodass die Kommunikation der ersten Kommunikationsschnittstellen durch den Fehler der zweiten Kommunikationsschnittstelle nicht beeinträchtigt wird.

Ein erfindungsgemäßes Verfahren zur Kommunikation über eine Verteilervorrichtung in einem Datennetzwerk in einem Fahrzeug weist auf: Kommunizieren mit Kommunikationspartnern einer ersten Priorität über eine Anzahl erster Kommunikationsschnittstellen, Kommunizieren mit Kommunikationspartnern einer zweiten Priorität über eine Anzahl zweiter Kommunikationsschnittstellen, wobei die zweite Priorität niedriger ist, als die erste Priorität, Koppeln der ersten Kommunikationsschnittstellen und der zweiten Kommunikationsschnittstellen in kommunikativer Verbindung, Überwachen der Kommunikation über die zweiten Kommunikationsschnittstellen, und kommunikativ zu trennen zumindest der ersten Kommunikationsschnittstellen von der entsprechenden zweiten Kommunikationsschnittstelle, bei Auftreten eines Kommunikationsfehlers an einer der zweiten Kommunikationsschnittstellen.

Weitere Ausführungsformen und Weiterbildungen ergeben sich aus den Unteransprüchen sowie aus der Beschreibung unter Bezugnahme auf die Figuren.

In einer Ausführungsform kann die Koppeleinrichtung eine Vermittlungseinheit aufweisen, welche mit den ersten Kommunikationsschnittstellen und den zweiten Kommunikationsschnittstellen gekoppelt ist. Ferner kann jede der ersten Kommunikationsschnittstellen und jede der zweiten Kommunikationsschnittstellen einen Transceiver aufweisen, welcher mit der Vermittlungseinheit gekoppelt ist. Die Vermittlungseinheit kann dabei ausgebildet sein, Daten von über die ersten Kommunikationsschnittstellen empfangenen Kommunikationsnachrichten in Kommunikationsnachrichten auf den ersten Kommunikationsschnittstellen und den zweiten Kommunikationsschnittstellen auszugeben und Daten von über die zweiten Kommunikationsschnittstellen empfangenen Kommunikationsnachrichten in Kommunikationsnachrichten auf den ersten Kommunikationsschnittstellen und den zweiten Kommunikationsschnittstellen auszugeben.

Es versteht sich, dass die Vermittlungseinheit z.B. eine passive oder auch logikbasierte Vermittlungseinheit sein kann, welche elektrische Verbindungen zwischen den ersten Kommunikationsschnittstellen und zweiten Kommunikationsschnittstellen bereitstellt, d.h. z.B. basierend auf diskreten Gattern oder in einem FPGA implementierten Gattern, immer aber ohne Recheneinheit bzw. Software-basierte Verarbeitung. Eine solche Koppeleinrichtung arbeitet ohne Verzögerungen. In solch einer Ausführung der Koppeleinrichtung kann die Überwachungseinrichtung z.B. zwischen der Vermittlungseinheit und den ersten und zweiten Kommunikationsschnittstellen angeordnet sein.

Die einzelnen Transceiver können über die Vermittlungseinheit derart miteinander gekoppelt sein, dass die Ausgangssignale eines Transceivers als Eingangssignale für die anderen Transceiver weitergeleitet werden. Beispielsweise können die einzelnen Transceiver über eine Vermittlungseinheit miteinander gekoppelt werden, sodass dominante Signalpegel eines Transceivers rezessive Signalpegel anderer Transceiver überschreiben. Beispielsweise kann ein Spannungspegel von 0 V als dominantes Signal gegenüber einem Spannungspegel von z.B. 12 V oder dergleichen gelten. Ein dominanter Spannungspegel kann folglich erzeugt werden, indem z.B. die jeweilige Signalleitung mit Masse verbunden wird.

Üblicherweise weisen Transceiver, z.B. CAN-Transceiver, einen RX-Ausgang zur Ausgabe des an den am Bus anliegenden Signals und einen TX-Eingang zur Aufnahme des zu übertragenden Signals auf. Die Vermittlungseinheit kann für jeden Transceiver einen elektrischen Anschluss aufweisen, der dessen RX-Ausgang und dessen TX-Eingang elektrisch mit den RX-Ausgängen und TX-Eingängen der weiteren Transceiver koppelt. Die Vermittlungseinheit kann also z.B. lediglich eine Leitung aufweisen, welche diese elektrische Verbindung herstellt. Es versteht sich, dass z.B. die Verbindung zwischen Signalleitung und RX-Ausgängen jeweils über eine Diode gegen ein Einspeisen eines Signals geschützt sein können. Ferner kann z.B. ein Pull-Up Widerstand vorgesehen sein, um ohne ein anliegendes Signal den Pegel in der Vermittlungseinheit auf einen rezessiven Pegel zu setzen.

Alternativ kann die Vermittlungseinheit in einem Logikbaustein implementiert werden. Eine solche Vermittlungseinheit kann z.B. Signalumsetzer aufweisen, welche die beiden Anschlüsse der jeweiligen Transceiver kontaktieren. Die Signalumsetzer können in der Vermittlungseinheit, wie oben beschrieben, derart miteinander gekoppelt sein, dass jeder Signalumsetzer entweder ein dominantes Signal oder ein rezessives Signal an die anderen Signalumsetzer ausgibt. Jeder der Signalumsetzer wird dann ein rezessives Signal an den TX-Eingang des jeweiligen Transceivers anlegen, solange keiner der Signalumsetzer ein dominantes Signal ausgibt. Empfängt einer der Signalumsetzer über den RX-Ausgang des jeweiligen Transceivers ein dominantes Signal, wird er dieses an die anderen Signalumsetzer übermitteln. Diese werden dann an die TX-Eingänge der entsprechenden Transceiver ebenfalls ein dominantes Signal anlegen. Die hier beschriebene Funktionalität einer Vermittlungseinheit kann z.B. als Logik in einem FPGA implementiert werden. Die hier beschriebene Funktionalität einer Vermittlungseinheit kann z.B. als Logik in einem ASIC implementiert werden.

Wird die Koppeleinrichtung als rechnergestützte bzw. rechnerbasierte Koppeleinrichtung ausgebildet, z.B. als Mikrocontroller mit einer entsprechenden Software oder Firmware, kann die Vermittlungseinheit als Funktion der Software oder Firmware ausgebildet sein. Die aktive Koppeleinrichtung kann z.B. über I/O-Ports mit den einzelnen Transceivern gekoppelt sein. Es versteht sich, dass jeweils eine Überwachungseinrichtung zwischen Transceiver und aktive Koppeleinrichtung geschaltet werden kann. Die Überprüfung auf das Vorhandensein eines dominanten Signals oder rezessiven Signals an den Anschlüssen der aktiven Koppeleinrichtung und das Weiterleiten und Ausgeben entsprechender dominanter Signale kann dann z.B. in der Software oder Firmware erfolgen.

Die Transceiver entsprechen dabei dem jeweils eingesetzten Datennetzwerk und wandeln digitale Daten entsprechend dem jeweiligen Standard (PHY-Layer) in Spannungen oder Ströme auf den Datenleitungen. Der Begriff "Datenleitung" umfasst im Rahmen der vorliegenden Erfindung jede Art von Datenleitung, die in dem Datennetzwerk eingesetzt werden kann. Der Begriff "Datenleitung" umfasst folglich Leitungen mit einer, zwei oder mehr einzelnen Leitungen.

Wird die Verteilervorrichtung z.B. in einem CAN-Bus eingesetzt, werden die Transceiver entsprechend als CAN-Transceiver ausgeführt. Ausgangsseitig zur Koppeleinrichtung hin können die Transceiver z.B. serielle oder parallel digitale Schnittstellen für empfangene Daten, Rx, und zu sendende Daten, Tx, aufweisen. Die Verteilervorrichtung kann z.B. auch für Ethernet, insbesondere im Multidrop-Mode, z.B. 10-BASE-T1s, genutzt werden. Hierbei würde anstatt der CAN-Transceiver ein geeignetes MDI zum Einsatz kommen und anstatt der CAN IDs würden die Ethernet IDs betrachtet werden, welche auch zu Beginn der Nachricht auf dem gemeinsamen Medium übertragen werden.

Die Überwachungseinrichtung kann bei einer rechnerbasierten Koppeleinrichtung z.B. als Bestandteil oder Funktion z.B. der Software oder Firmware in der aktiven Koppeleinrichtung ausgebildet werden.

Alternativ kann die Überwachungseinrichtung z.B. jeweils zwischen Transceiver und Vermittlungseinheit angeordnet werden. Es versteht sich, dass die Überwachungseinrichtung dazu z.B. auch aus einer Vielzahl einzelner Komponenten aufgebaut sein kann. Beispielsweise kann für jeden Transceiver eine eigene Überwachungslogik vorgesehen werden. Ferner versteht sich, dass die Überwachungseinrichtung bzw. die dedizierten Überwachungslogik-Elemente gemeinsam mit der Koppeleinrichtung z.B. in einem FPGA oder Mikrocontroller implementiert werden können.

Die Vermittlungseinheit kann z.B. auch als eine Mischung aus aktiver und passiver Einheit ausgebildet sein. Die passive Funktion der Vermittlungseinheit kann z.B. darin bestehen, die von den einzelnen Transceivern bzw. über die Überwachungseinrichtung empfangenen Signalpegel ohne Analyse des jeweiligen Inhalts weiterzuleiten. Die Vermittlungseinheit kann also z.B. als eine Art verstärkender Sternkoppler oder Sternpunkt verstanden werden, der für jeden Leitungszweig einen Transceiver aufweist. Durch diese Funktion der Vermittlungseinheit kann z.B. bei einem CAN-Bus als Datennetzwerk sichergestellt werden, dass über jeden der Transceiver gleichzeitig Daten empfangen und gesendet werden können. Damit kann auf dem CAN-Bus z.B. die Arbitrierung mit allen Teilnehmern trotz der zwischengeschalteten Verteilervorrichtung erfolgen. Die Verteilervorrichtung ist für die einzelnen Kommunikationspartner dabei transparent bzw. unsichtbar.

Der aktive Teil der Vermittlungseinheit kann dagegen darin bestehen, dass einzelne Verbindungen gezielt unterbrochen werden können. Beispielsweise kann eine der ersten oder zweiten Kommunikationsschnittstellen gezielt von dem Rest des Datennetzwerks getrennt werden, wenn erkannt wird, dass ein Kommunikationspartner an dieser Kommunikationsschnittstelle fehlerhafte Nachrichten sendet.

Mit Hilfe der Koppeleinrichtung, und insbesondere der Vermittlungseinheit, in Verbindung mit der Überwachungseinrichtung kann die Kommunikation hochpriorer Systeme bzw. Kommunikationspartner geschützt werden. Damit wird es möglich, dass sich hochpriore Kommunikationspartner mit niederprioren Kommunikationspartnern ein Datennetzwerk teilen. Kerngedanke hierbei ist die Überwachung der Kommunikation, also die Identifikation und Isolation von Fehlern.

In dieser Ausführung mit eigenen Transceivern werden einzelne Zweige des Datennetzwerks voneinander entkoppelt. Dies führt zu weniger Problemen mit der Signalübertragung, wodurch vielfältigere Möglichkeiten bei der Architektur des Bussystems eröffnet werden. Dies wiederum kann zu einer deutlichen Einsparung von Leitungen führen. Insbesondere wird z.B. der Aufbau einer Sterntopologie bzw. einer Mischtopologie mit mehreren Verteilervorrichtungen für das Datennetzwerk möglich, ohne dass dies zu einer Verschlechterung der Signalqualität führen würde. Das Datennetzwerk wird durch die Verteilervorrichtung in einzelne Teilnetzwerke aufgeteilt und diese separat überwacht. Die Vermittlungseinheit mit der Überwachungseinrichtung kontrolliert den Informationsfluss und hält auch im Fehlerfall die Kommunikation für Kommunikationspartner an den fehlerfreien Kommunikationsschnittstellen aufrecht.

Auf Hardwareebene ergeben sich Punkt-zu-Punkt Verbindungen, welche elektrisch für die Signalqualität optimal sind. Die Impedanzkontinuität ist bei Punkt-zu-Punkt Verbindungen deutlich höher als bei anderen Verbindungen, z.B. Sterntopologien oder Stichleitungen. Probleme mit der Signalqualität, speziell im Hinblick auf höhere Frequenzen, z.B. bei CAN-FD, werden verhindert. In dem Datennetzwerk tritt daher weder eine Minderung der Signalqualität, noch eine Dämpfung der Signalamplitude ein.

In einer weiteren Ausführungsform kann zwischen mindestens einem der Transceiver und der Vermittlungseinheit ein Entkopplungselement angeordnet sein, welches ausgebildet sein kann, den jeweiligen Transceiver von den Datenleitungen galvanisch zu entkoppeln und/oder gesteuert von diesen zu trennen.

Werden einzelne Kommunikationsschnittstellen galvanisch entkoppelt, können sich elektrische Fehler oder Störungen, wie z.B. Überspannungen, in einzelnen Zweigen des Datennetzwerks nicht über die Kommunikationsschnittstellen und die Koppeleinrichtung fortsetzten. Es versteht sich, dass lediglich ausgewählte Transceiver oder auch alle Transceiver galvanisch entkoppelt werden können. Das Trennen, z.B. mit entsprechenden Schaltelementen, dient dazu, den Restbus vor Fehlern zu schützen bzw. eine Fehlerausbreitung zu verhindern.

In noch einer Ausführungsform kann die Überwachungseinrichtung dazu ausgebildet sein, beim Ausgeben von Daten an einer der ersten Kommunikationsschnittstellen oder einer der zweiten Kommunikationsschnittstellen zu prüfen, ob die an den jeweiligen Transceiver ausgegebenen Daten den auf der jeweiligen Datenleitung anliegenden Signalpegeln entsprechen. Die Überwachungseinrichtung kann ausgebildet sein, die jeweilige Kommunikationsschnittstelle kommunikativ zu trennen bzw. zu isolieren, wenn die an den jeweiligen Transceiver ausgegebenen Daten nicht den auf der jeweiligen Datenleitung anliegenden Signalpegeln entsprechen.

Die Überwachungseinrichtung kann folglich z.B. Fehler der einzelnen Transceiver und der Datenleitungen erkennen. Ein Transceiver kann z.B. bei einem entsprechenden Defekt die vorgegebenen Daten nicht in entsprechende Signalpegel auf den Datenleitungen des jeweiligen Zweigs des Datennetzwerks wandeln. Andere Fehler, die zu diesem Verhalten führen können, sind z.B. Kurzschlüsse der Datenleitungen.

Erkennt die Überwachungseinrichtung einen solchen Fehler, kann die Überwachungseinrichtung den entsprechenden Zweig des Datennetzwerks, also die entsprechende Kommunikationsschnittstelle, kommunikativ trennen bzw. isolieren.

In noch einer weiteren Ausführungsform kann die Überwachungseinrichtung ausgebildet sein, beim Überwachen für über eine der ersten Kommunikationsschnittstellen und/oder eine der zweiten Kommunikationsschnittstellen empfangene Kommunikationsnachrichten zu prüfen, ob die jeweils empfangene Kommunikationsnachricht formal fehlerfrei ist und/oder ob die jeweils empfangene Kommunikationsnachricht eine für den jeweiligen Kommunikationspartner freigegebene Kennung aufweist und/oder ob die jeweils empfangene Kommunikationsnachricht eine vorgegebene Maximallänge nicht überschreitet.

Wie oben bereits erläutert, kann die Überwachungseinrichtung beim Eintreffen einer Nachricht auf einer der Kommunikationsschnittstellen bereits prüfen, ob diese Nachricht fehlerfrei ist. Fehlerfrei kann bedeuten, dass die Kommunikationsnachrichten anhand vorgegebener Regeln auf Konformität geprüft werden. Die Überprüfung kann dabei insbesondere parallel zum Empfang der Kommunikationsnachrichten stattfinden.

Die Überwachungseinrichtung kann folglich während dem Empfang der Nachricht z.B. bereits erkennen, ob diese den formalen Anforderungen genügt. Die formalen Anforderungen können sich z.B. auf das Einhalten vorgegebener Abstandszeiten zwischen Nachrichten, auf vorgegebene Bitlängen für das jeweilige Bussystem und dergleichen beziehen. Ein formaler Fehler kann daher bereits am Beginn der Übertragung einer Kommunikationsnachricht erkannt werden, insbesondere noch bevor z.B. die komplette Kennung oder ID einer Kommunikationsnachricht übertragen wurde.

Bussysteme wie z.B. der CAN-Bus unterstützen IDs oder Kennungen für einzelne Kommunikationsnachrichten. Bei solchen Bussystem kann die Überwachungseinrichtung z.B. beim Empfang einer Kommunikationsnachricht über eine der zweiten Kommunikationsschnittstellen prüfen, ob die gesendete ID von dem jeweiligen Kommunikationspartner überhaupt gesendet werden darf. Im Fehlerfall kann z.B. ein niederpriorer Kommunikationspartner an einer der zweiten Kommunikationsschnittstellen eine Nachricht mit einer falschen, hochprioren ID versenden und damit eine Nachricht eines hochprioren Kommunikationspartners an einer der ersten Kommunikationsschnittstellen überlagern. Damit wird die Nachricht des hochprioren Kommunikationspartners überlagert und kann nicht übertragen werden.

Die Überwachungseinrichtung kann beim Empfang einer Kommunikationsnachricht über eine der zweiten Kommunikationsschnittstellen z.B. auch prüfen, ob die jeweilige Kommunikationsnachricht eine vorgegebene Maximallänge einhält. Dies dient dazu, den Fehlerfall des sog. "babbling idiot" zu erkennen und eine Störung des Datennetzwerks zu vermeiden. Als "babbling idiot" wird üblicherweise ein Kommunikationspartner bezeichnet, der auf Grund eines Fehlers unkontrolliert Nachrichten in das Datennetzwerk sendet.

In einer weiteren Ausführungsform kann die Überwachungseinrichtung ausgebildet sein, beim Empfangen einer Kommunikationsnachricht über eine der ersten Kommunikationsschnittstellen zu prüfen, ob die empfangene Kommunikationsnachricht eine vorgegebene Nachrichtenpriorität aufweist, und wenn die empfangene Kommunikationsnachricht die vorgegebene Nachrichtenpriorität aufweist, ein Weiterleiten von Kommunikationsnachrichten von den zweiten Kommunikationsschnittstellen für die Dauer der Übertragung der empfangenen Kommunikationsnachricht zu unterbinden. Das Unterbinden kann dabei in einer Art und Weise erfolgen, dass die Kommunikation der hochprioren Kommunikationsteilnehmer selbst im Fehlerfall der niederprioren Kommunikationsteilnehmer nicht gestört wird. Dazu kann z.B. das Weiterleiten von Signalen von dem jeweiligen Transceiver zur Koppeleinrichtung blockiert werden.

Die hochprioren Kommunikationspartner an den ersten Kommunikationsschnittstellen können Kommunikationsnachrichten unterschiedlicher Nachrichtenprioritäten senden. So kann ein hochpriorer Kommunikationspartner sowohl Kommunikationsnachrichten mit niedriger Nachrichtenpriorität als auch mit hoher Nachrichtenpriorität aussenden. Dabei können die Kommunikationsnachrichten mit hoher Nachrichtenpriorität z.B. sicherheitsrelevante Funktionen betreffen. Die Kommunikationsnachrichten mit niedriger Nachrichtenpriorität können dagegen z.B. unkritische Funktionen betreffen. Es müssen folglich nicht alle von einem hochprioren Kommunikationspartner gesendeten Kommunikationsnachrichten gleichbehandelt werden. Der Begriff "vorgegebene Nachrichtenpriorität" kann sich dabei auf eine einzelne Priorität oder eine Gruppe bzw. einen Bereich von Prioritäten beziehen. Die Nachrichtenpriorität kann folglich genau der vorgegebene Nachrichtenpriorität entsprechen oder innerhalb des vorgebebenen Bereichs bzw. der vorgegebenen Gruppe liegen.

Sendet ein hochpriorer Kommunikationspartner aber eine Kommunikationsnachricht mit einer hohen Priorität, kann die Überwachungseinrichtung dies erkennen. Während der Übertragung dieser Kommunikationsnachricht kann die Überwachungseinrichtung die Übertragung von Kommunikationsnachrichten an den zweiten Kommunikationsschnittstellen unterbinden.

Bei einem CAN-Bus findet bei der Übertragung von Kommunikationsnachrichten implizit eine Arbitrierung statt. Am Anfang einer Kommunikationsnachricht wird zur Arbitrierung die ID der Kommunikationsnachricht übermittelt. Die ID entspricht dabei auch der Priorität der Nachricht. Beginnen zwei Kommunikationspartner gleichzeitig eine Übertragung, so überschreibt das erste dominante Bit einer ID das entsprechend rezessive Bit der anderen ID. Die Kommunikationsnachricht, deren ID das erste rezessive Bit aufweist wird folglich als die Kommunikationsnachricht mit niedrigerer Priorität erkannt. Der jeweilige Kommunikationspartner beendet darauf seine Übertragung, damit die Kommunikationsnachricht mit höherer ID unbehindert gesendet werden kann. Für die Übertragung von Kommunikationsnachrichten mit hoher Priorität wird also auch eine ID mit hoher Priorität (= niedrige ID, z.B. 0) vergeben, um ihr so Vorrang bei der Übertragung zu gewähren.

Die Überwachungseinrichtung kann folglich prüfen, mit welcher Nachrichtenpriorität eines der hochprioren Systeme eine Kommunikationsnachricht sendet. Ist die Nachrichtenpriorität als hochprior bekannt bzw. gekennzeichnet, kann für die Dauer der Kommunikationsnachricht die Kommunikation für die Kommunikationspartner an den zweiten Kommunikationsschnittstellen gesperrt werden. An den ersten Kommunikationsschnittstellen dagegen kann sie weiter erlaubt sein, da einer der Kommunikationspartner an einer anderen ersten Kommunikationsschnittstelle eine Kommunikationsnachricht mit noch höherer Nachrichtenpriorität senden könnte.

In noch einer weiteren Ausführungsform kann die Verteilervorrichtung für jede der ersten Kommunikationsschnittstellen und jede der zweiten Kommunikationsschnittstellen ein Trennelement aufweisen, welches ausgebildet sein kann, die jeweilige Kommunikationsschnittstelle gesteuert zu isolieren. Die Überwachungseinrichtung kann ausgebildet sein, zum Isolieren einer der ersten Kommunikationsschnittstellen oder einer der zweiten Kommunikationsschnittstellen das jeweilige Trennelement entsprechend anzusteuern.

Die Trennelemente können z.B. als dedizierte Schalter oder dergleichen an dem jeweiligen Transceiver bzw. zwischen dem jeweiligen Signalumsetzer und der Vermittlungseinheit angeordnet sein.

Es versteht sich, dass die Trennelemente und Bestandteile der Überwachungseinrichtung z.B. auch gemeinsam in bzw. an den jeweiligen Signalumsetzern angeordnet werden können.

In einer weiteren Ausführungsform kann die Koppeleinrichtung eine Signalleitung aufweisen, welche über einen Pull-Up-Widerstand mit einer Spannungsversorgung gekoppelt sein kann. Die Signalleitung kann über die Überwachungseinrichtung mit Sende-Eingängen der Kommunikationsschnittstellen, also z.B. mit den TX-Eingängen der Transceiver, gekoppelt sein. Ferner kann die Signalleitung jeweils über eine Diode in Durchlassrichtung mit Empfangs-Eingängen der Kommunikationsschnittstellen, also z.B. RX-Eingängen der Transceiver, gekoppelt sein. Es versteht sich, dass lediglich z.B. derjenige Teil der Überwachungseinrichtung zwischen der Signalleitung und den Kommunikationsschnittstellen vorgesehen sein kann, der der kommunikativen Trennung dient, also z.B. jeweils ein Schaltelement für die Sende-Eingänge und eines für die Empfangs-Eingänge. Weitere Elemente der Überwachungseinrichtung, z.B. Schnittstellenlogikeinheiten oder dergleichen, können separat von diesen Schaltelementen vorgesehen sein.

### Kurze Figurenbeschreibung

Nachfolgend werden vorteilhafte Ausführungsbeispiele der Erfindung unter Bezugnahme auf die begleitenden Figuren erläutert. Es zeigen:
- Figur 1: ein Blockschaltbild eines Ausführungsbeispiels einer Verteilervorrichtung gemäß der vorliegenden Erfindung;
- Figur 2: ein Blockschaltbild eines Ausschnitts eines Ausführungsbeispiels einer Verteilervorrichtung gemäß der vorliegenden Erfindung;
- Figur 3: ein Blockschaltbild eines weiteren Ausführungsbeispiels einer Verteilervorrichtung gemäß der vorliegenden Erfindung;
- Figur 4: ein Diagramm mit möglichen Signalverläufen in einem Ausführungsbeispiel einer Verteilervorrichtung gemäß der vorliegenden Erfindung;
- Figur 5: ein Ablaufdiagramm eines Ausführungsbeispiels eines Verfahrens gemäß der vorliegenden Erfindung;
- Figur 6: ein Ablaufdiagramm eines Ausführungsbeispiels eines Überwachungsablaufs eines Verfahrens gemäß der vorliegenden Erfindung;
- Figur 7: ein Ablaufdiagramm eines Ausführungsbeispiels eines Überwachungsablaufs eines Verfahrens gemäß der vorliegenden Erfindung; und
- Figur 8: ein Ablaufdiagramm eines Ausführungsbeispiels eines Überwachungsablaufs eines Verfahrens gemäß der vorliegenden Erfindung.

Die Figuren sind lediglich schematische Darstellungen und dienen nur der Erläuterung der Erfindung. Gleiche oder gleichwirkende Elemente sind durchgängig mit den gleichen Bezugszeichen versehen.

### Detaillierte Beschreibung

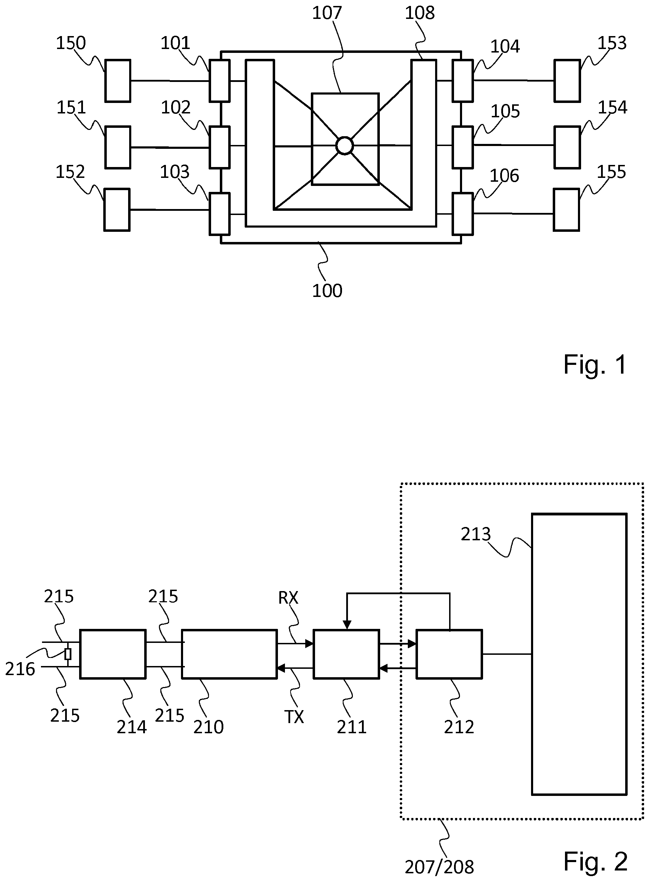

Figur 1 zeigt ein Blockschaltbild eines Ausführungsbeispiels einer Verteilervorrichtung 100. Die Verteilervorrichtung 100 kann z.B. in einem Datennetzwerk in einem Fahrzeug, z.B. einem CAN-Bus, eingesetzt werden. Die Verteilervorrichtung 100 weist beispielhaft drei erste Kommunikationsschnittstellen 101, 102, 103 und drei zweite Kommunikationsschnittstellen 104, 105, 106 auf. Es versteht sich, dass jede andere Anzahl an ersten Kommunikationsschnittstellen und/oder jede andere Anzahl an zweiten Kommunikationsschnittstellen ebenfalls möglich ist. Eine Koppeleinrichtung 107 koppelt die ersten Kommunikationsschnittstellen 101, 102, 103 und die zweiten Kommunikationsschnittstellen 104, 105, 106 kommunikativ miteinander. Zwischen den ersten Kommunikationsschnittstellen 101, 102, 103 und den zweiten Kommunikationsschnittstellen 104, 105, 106 ist eine Überwachungseinrichtung 108 angeordnet.

Die ersten Kommunikationsschnittstellen 101, 102, 103 sind jeweils mit einem Kommunikationspartner 150, 151, 152 einer ersten Priorität gekoppelt. Die zweiten Kommunikationsschnittstellen 104, 105, 106 sind jeweils mit einem Kommunikationspartner 153, 154, 155 einer zweiten Priorität gekoppelt. Die zweite Priorität ist dabei niedriger, als die erste Priorität. Dies bedeutet, dass die Kommunikationspartner 150, 151, 152 der ersten Priorität als wichtiger eingestuft werden, als die Kommunikationspartner 153, 154, 155 der zweiten Priorität. Die Kommunikationspartner 150, 151, 152 der ersten Priorität können also z.B. als hochprior oder sicherheitsrelevant eingestuft werden, während die Kommunikationspartner 153, 154, 155 der zweiten Priorität z.B. lediglich Komfortfunktionen bereitstellen können. Es versteht sich, dass an jeder der ersten Kommunikationsschnittstellen 101, 102, 103 und zweiten Kommunikationsschnittstellen 104, 105, 106 mehr als ein Kommunikationspartner 150, 151, 152, 153, 154, 155 angeschlossen sein kann. Beispielsweise kann an einer oder mehreren der ersten Kommunikationsschnittstellen 101, 102, 103 und zweiten Kommunikationsschnittstellen 104, 105, 106 ein Netzwerkzweig mit mehreren Teilnehmern angeschlossen sein.

Die Koppeleinrichtung 107 stellt eine Art Sternpunkt zwischen den einzelnen ersten Kommunikationsschnittstellen 101, 102, 103 und zweiten Kommunikationsschnittstellen 104, 105, 106 dar. Sie koppelt diese also derart miteinander, dass eine Signalübertragung zwischen den ersten Kommunikationsschnittstellen 101, 102, 103 und zweiten Kommunikationsschnittstellen 104, 105, 106 möglich ist. Dabei ist die Koppeleinrichtung 107 für die einzelnen Kommunikationspartner 150, 151, 152, 153, 154, 155 transparent und ermöglicht eine verzögerungsfreie Kommunikation zwischen den einzelnen Kommunikationspartnern 150, 151, 152, 153, 154, 155.

Über die Koppeleinrichtung 107 können folglich die Kommunikationspartner 150, 151, 152, 153, 154, 155 miteinander kommunizieren. Wie oben bereits erläutert, werden aber die Kommunikationspartner 150, 151, 152 der ersten Priorität als hochprior bzw. sicherheitsrelevant eingestuft. In einem Fahrzeug ist also z.B. sicherzustellen, dass die Kommunikationspartner 153, 154, 155 der zweiten Priorität eine Kommunikation der Kommunikationspartner 150, 151, 152 der ersten Priorität nicht stören können.

Die Überwachungseinrichtung 108 überwacht folglich die Kommunikation über die zweiten Kommunikationsschnittstellen 104, 105, 106. Bei Auftreten eines Kommunikationsfehlers an einer der zweiten Kommunikationsschnittstellen 104, 105, 106 kann die Überwachungseinrichtung 108 dann zumindest die ersten Kommunikationsschnittstellen 101, 102, 103 von der entsprechenden zweiten Kommunikationsschnittstelle 104, 105, 106, an welcher der Fehler aufgetreten ist, isolieren. Es versteht sich, dass die Überwachungseinrichtung 108 z.B. lediglich diejenige der zweiten Kommunikationsschnittstellen 104, 105, 106 isoliert, an welcher ein Fehler aufgetreten ist. Folglich können die Kommunikationspartner 150, 151, 152 der ersten Priorität und die Kommunikationspartner 153, 154, 155 der zweiten Priorität, die nicht an der fehlerbehafteten zweiten Kommunikationsschnittstelle 104, 105, 106 angeschlossen sind, weiterhin miteinander kommunizieren. Es versteht sich, dass die Überwachungseinrichtung 108 auch die ersten Kommunikationsschnittstellen 101, 102, 103 auf das Auftreten von Fehlern überwachen und im Fehlerfall isolieren kann.

Die Überwachungseinrichtung 108 kann z.B. empfangene Kommunikationsnachrichten dahingehend prüfen, ob die jeweils empfangene Kommunikationsnachricht formal fehlerfrei ist, also z.B. vorgegebene zeitliche Abstände und Signallängen eingehalten werden. Ferner kann die Überwachungseinrichtung 108 z.B. überwachen ob die jeweils empfangene Kommunikationsnachricht eine für den jeweiligen Kommunikationspartner 150, 151, 152, 153, 154, 155 freigegebene Kennung aufweist bzw. ob die jeweils empfangene Kommunikationsnachricht eine vorgegebene Maximallänge nicht überschreitet. Die Überwachungseinrichtung 108 kann selbstverständlich weitere formale Aspekte der eintreffenden Kommunikationsnachrichten prüfen.

Beim Empfangen einer Kommunikationsnachricht über eine der ersten Kommunikationsschnittstellen 101, 102, 103 kann die Überwachungseinrichtung 108 auch prüfen, ob die empfangene Kommunikationsnachricht eine vorgegebene Nachrichtenpriorität aufweist, welche diese Kommunikationsnachricht als hochprior kennzeichnet. Wenn die empfangene Kommunikationsnachricht die vorgegebene Nachrichtenpriorität aufweist, kann die Überwachungseinrichtung 108 die Übertragung von Kommunikationsnachrichten von den zweiten Kommunikationsschnittstellen 104, 105, 106 für die Dauer der Übertragung der empfangenen Kommunikationsnachricht unterbinden. Die Kommunikationspartner 153, 154, 155 der zweiten Priorität können folglich die Übertragung der hochprioren Kommunikationsnachricht nicht stören.

Die Überwachungseinrichtung 108 kann ferner prüfen, ob beim Ausgeben von Daten an einer der ersten Kommunikationsschnittstellen 101, 102, 103 oder einer der zweiten Kommunikationsschnittstellen 104, 105, 106, die ausgegebenen Daten den auf der jeweiligen Datenleitung anliegenden Signalpegeln entsprechen. Beispielsweise kann bei einem CAN-Bus ein rezessives Signal mit einem positiven Spannungspegel auf der Datenleitung nicht ausgegeben werden, wenn die entsprechende Leitung einen Kurzschluss z.B. nach Masse aufweist, die Datenleitungen des CAN-Busses untereinander einen Kurzschluss aufweisen oder die entsprechende Schnittstelle defekt ist. Weitere Fehler sind möglich. Tritt ein solcher Fehler auf, kann die Überwachungseinrichtung 108 die jeweilige Kommunikationsschnittstelle 101, 102, 103, 104, 105, 106 ebenfalls isolieren.

Figur 2 zeigt einen Ausschnitt eines Ausführungsbeispiels einer Verteilervorrichtung gemäß der vorliegenden Erfindung, welcher den Anschluss der Verteilervorrichtung an Datenleitungen 215 darstellt. Die Datenleitungen 215 können z.B. die High- und Low-Leitungen eines CAN-Busses sein, also CAN-H und CAN-L genannt. Ein entsprechender Abschlusswiderstand ist beispielhaft angedeutet und kann je nach Anwendung in Abhängigkeit von dem gewählten Kommunikationsmedium und dem Kommunikationsstandard notwendig sein. Es versteht sich, dass die Verteilervorrichtung gemäß der vorliegenden Erfindung auch mit Bussystemen genutzt werden kann, die lediglich eine Datenleitung nutzen. Als Rückleitung für das Signal kann in solchen Systemen z.B. eine gemeinsame Masse dienen.

Die Datenleitungen 215 sind über ein optionales Entkopplungselement 214 mit einem Transceiver 210 gekoppelt, welches der galvanischen Trennung der Datenleitungen 215 dient. Der Transceiver 210 ist über eine Sendeleitung TX und eine Empfangsleitung RX mit einem Trennelement 211 verbunden. Das Trennelement 211 ist ebenfalls über die Sendeleitung TX und die Empfangsleitung RX mit einer Schnittstellenlogik 212 gekoppelt. Mit dem Trennelement 211 kann folglich eine logische Entkopplung der jeweiligen Datenleitungen 215 durchgeführt werden.

Die Schnittstellenlogik 212 ist ferner mit einem Steuereingang des Trennelements 211 und einer Vermittlungseinheit 213 gekoppelt. Optional kann die Schnittstellenlogik 212 auch mit einem Steuereingang des Entkopplungselements 214 verbunden sein, sodass dieses gesteuert geöffnet werden kann. Das Entkopplungselement 214 kann hierzu beispielsweise Schaltelemente in den Datenleitungen 215 aufweisen, welche geöffnet werden können, wenn z.B. ein Fehler in der Verteilervorrichtung vorliegt. Dies dient dazu, den Restbus an dem entsprechenden Transceiver 210 nicht negativ zu beeinflussen bzw. die Fehlerausbreitung zu verhindern. Das Entkopplungselement 214 kann also zusätzlich auch eine elektrische Trennung durchführen.

In Figur 2 sind die Schnittstellenlogik 212 und die Vermittlungseinheit 213 als Bestandteile der kombinierten Koppeleinrichtung 207 und Überwachungseinrichtung 208 dargestellt. Beispielsweise kann die kombinierten Koppeleinrichtung 207 und Überwachungseinrichtung 208 in einem FPGA implementiert werden.

Es versteht sich ferner, dass die dargestellte Reihenfolge der einzelnen Elemente variiert werden kann. Ferner können z.B. auch Elemente entfernt werden. Beispielsweise kann das Entkopplungselement 214 lediglich als optionales Element angesehen werden. Ferner kann z.B. die Schnittstellenlogik 212 mit dem Transceiver 210 gekoppelt sein und das Trennelement 211 zwischen der Schnittstellenlogik 212 und der Vermittlungseinheit 213 oder zwischen Entkopplungselement 214 und Schnittstellenlogik 212 angeordnet sein.

Ferner kann das Entkopplungselement 214 z.B. in dem jeweiligen Transceiver 210 integriert sein.

Die Schnittstellenlogik 212 kann funktional als ein Bestandteil der Überwachungseinrichtung 208 ausgebildet sein. Physisch kann für jede Kommunikationsschnittstelle eine eigene Schnittstellenlogik 212 vorgesehen sein. Die Schnittstellenlogik 212 führt die Überwachung entsprechend der für die Überwachungseinrichtung 208 beschriebenen Funktionen für die jeweilige Kommunikationsschnittstelle durch und steuert bei Auftreten eines Fehlers das Trennelement 211 an. Das Trennelement 211 trennt bei entsprechender Ansteuerung die jeweilige Kommunikationsschnittstelle, verhindert also eine weitere Übertragung von Daten bzw. Signalen über die jeweilige Kommunikationsschnittstelle, hier über die Datenleitungen 215, CAN-H und CAN-L.

Die Vermittlungseinheit 213 ist mit allen ersten Kommunikationsschnittstellen und allen zweiten Kommunikationsschnittstellen gekoppelt und stellt die datenkommunikative Verbindung zwischen diesen her. Wie oben beschrieben, kann die Vermittlungseinheit 213 als eine passive bzw. logikbasierte Vermittlungseinheit 213 ausgebildet sein, welche es ermöglicht, dass dominante Signale, welche von einer der Kommunikationsschnittstellen empfangen werden, rezessive Signal von anderen Kommunikationsschnittstellen überlagern bzw. überschreiben.

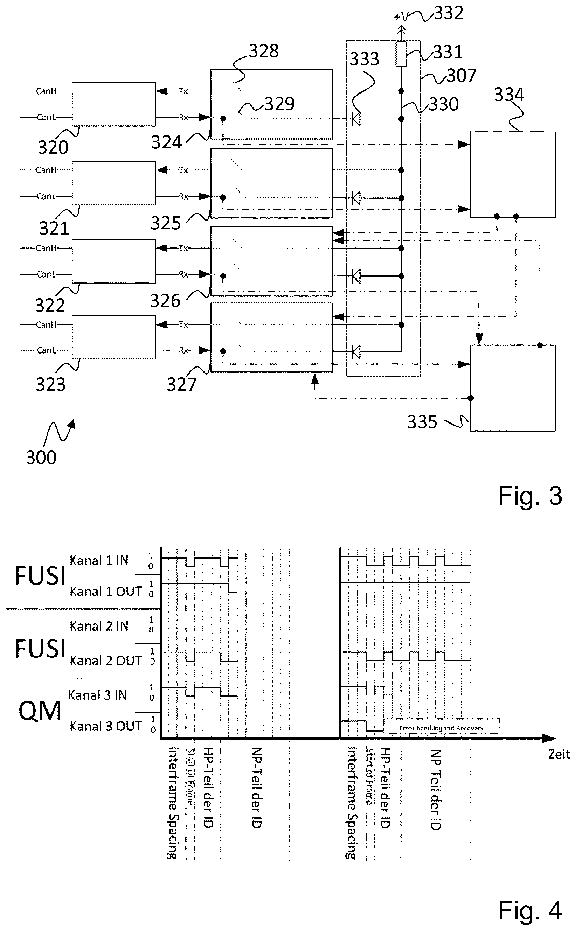

Für einen CAN-Bus kann eine passive bzw. logikbasierte Vermittlungseinheit 213 z.B. lediglich eine elektrische Verbindung der Signalleitungen, also TX und RX, sowie einen Pull-Up Widerstand für die Verbindungen aufweisen. Eine solche Ausführungsform der Vermittlungseinheit 213 wird in Figur 3 näher erläutert.

Ferner kann in der Vermittlungseinheit 213 auch ein Teil der Überwachungslogik der Überwachungseinrichtung 208 implementiert sein. Beispielsweise kann das Blockieren von Kommunikationsnachrichten niedriger Priorität während der Übertragung von Nachrichten hoher Priorität in der Logik der Vermittlungseinheit 213 durchgeführt werden.

Figur 3 zeigt ein Blockschaltbild einer Verteilervorrichtung 300. Die Verteilervorrichtung 300 weist eine zentrale Koppeleinrichtung 307 auf. Die Koppeleinrichtung 307 ist beispielhaft jeweils über eine TX-Leitung und eine RX-Leitung mit vier Trennelementen 324, 325, 326, 327 gekoppelt, die jeweils auch mit einem Transceiver 320, 321, 322, 323 gekoppelt sind. Es versteht sich, dass mehr oder weniger Trennelemente möglich sind. Die Transceiver 320, 321, 322, 323 sind als CAN-Bus Transceiver 320, 321, 322, 323 ausgebildet und jeweils mit einer CANH (CAN-High) und einer CANL (CAN-Low) Datenleitung gekoppelt.

Die Trennelemente 324, 325, 326, 327 weisen jeweils ein steuerbares Schaltelement 328 für die TX-Leitung und ein steuerbares Schaltelement 329 für die RX-Leitung auf. Der Übersichtlichkeit halber sind hier nur die Schaltelemente des ersten Trennelements 324 mit Bezugszeichen versehen.

Die Koppeleinrichtung 307 weist eine zentrale Signalleitung 330 auf, welche über einen Widerstand 331 mit einer Spannungsversorgung 332 gekoppelt ist. Der Widerstand 331 dient folglich als Pull-Up-Widerstand. Die Verbindung zwischen der Signalleitung 330 und den Transceivern 320, 321, 322, 323 über die TX-Leitung weist neben dem Schaltelement 328 keine weiteren Elemente auf. Die Verbindung zwischen der Signalleitung 330 und den Transceivern 320, 321, 322, 323 über die RX-Leitung weist zwischen der Signalleitung 330 und dem Schaltelement 329 eine Diode 333 in Durchlassrichtung auf.

Bei der Verteilervorrichtung 300 sind die Transceiver 320, 321 beispielhaft mit hochprioren Kommunikationspartnern gekoppelt. Die Transceiver 322, 323 sind beispielhaft mit niederprioren Kommunikationspartnern gekoppelt.

Ferner sind zwei Schnittstellenlogikeinheiten 334, 335 vorgesehen. Es versteht sich, dass die Aufteilung in zwei Schnittstellenlogikeinheiten 334, 335 lediglich beispielhaft gewählt wurde und dass die hierzu beschriebenen Funktionen z.B. auch in einer Schnittstellenlogik bereitgestellt werden können. Die Schnittstellenlogikeinheiten 334, 335 sind jeweils zwischen dem entsprechenden Schaltelement 329 und dem entsprechenden Transceiver 320, 321, 322, 323 mit der entsprechenden RX-Leitung gekoppelt, um das empfangene Signal zu erfassen. Es versteht sich, dass die Schnittstellenlogikeinheiten 334, 335 z.B. auch mit der TX-Leitung oder anderen Anschlüssen der Transceiver oder anderer Elemente, z.B. deren Diagnoseanschlüssen, gekoppelt sein können. Die Schnittstellenlogikeinheiten 334, 335 bilden in dieser Ausführungsform die Funktion der Überwachungseinrichtung ab.

Die Schnittstellenlogikeinheit 334 dient der Überwachung der Signalpegel an den Transceivern 320, 321, welche mit hochprioren Kommunikationspartnern gekoppelt sind. Stellt die Schnittstellenlogikeinheit 334 z.B. fest, dass an einem der Transceiver 320, 321 eine Kommunikationsnachricht mit hoher Priorität empfangen wird, kann sie das Empfangen von Signalen über die Transceiver 322, 323 durch Öffnen des entsprechenden Schaltelements in den Trennelementen 326, 327 verhindern.

Die Schnittstellenlogikeinheit 335 dient der Überwachung der Signalpegel an den Transceivern 320, 321, welche mit niederprioren Kommunikationspartnern gekoppelt sind. Die Schnittstellenlogikeinheit 335 überwacht ob während einer hochprioren Nachricht einer der Transceiver 322 oder 323 versucht hat, das Kommunikationsnetzwerk bzw. den CAN-Bus auf einen dominanten Pegel zu ziehen und verriegelt diese dann durch Trennelemente 326, 327. Die Schnittstellenlogikeinheit 335 kann z.B. auch prüfen, ob über die RX-Leitung des entsprechenden Transceivers 320, 321 derjenige Signalpegel empfangen wird, der dem Status der TX-Leitung entspricht. Im Fehlerfall können diese zwei Signale voneinander abweichen. Die Schnittstellenlogikeinheit 335 kann daraufhin z.B. beide Schaltelemente 328, 329 des entsprechenden Transceivers 322, 323 öffnen.

Es versteht sich, dass die Schnittstellenlogikeinheiten 334, 335 die eintreffenden Signale auch auf formale Korrektheit prüfen können, wie oben bereits erläutert.

Zum leichteren Verständnis werden in der folgenden Beschreibung die Bezugszeichen zu den Figuren 1-3 als Referenz beibehalten.

Figur 4 zeigt ein Diagramm mit möglichen Signalverläufen in einem Ausführungsbeispiel einer Verteilervorrichtung 100, 300. In dem Diagramm sind die Signalverläufe beispielhaft für drei Kanäle oder Teilbusse dargestellt. Kanal 1 und Kanal 2 stellen dabei Kanäle mit hochprioren Kommunikationspartnern dar, an Kanal 3 sind dagegen niederpriore Kommunikationspartner angeschlossen. Der linke Signalverlauf stellt einen fehlerfreien Signalverlauf einer niederprioren Arbitrierung dar. Der rechte Signalverlauf stellt einen Signalverlauf einer hochpriore Nachricht mit Fehler auf Kanal 3 bei der Arbitrierung dar, bei welchem auf Kanal 3 ein Signal empfangen wird, welches auf diesem nicht gesendet werden darf. Die Diagramme stellen jeweils den Beginn einer Kommunikation auf einem CAN-Bus dar und zeigen für jeden Kanal die Signale auf der RX-Leitung (z.B. Kanal 1 IN) und der TX-Leitung (z.B. Kanal 1 OUT). Der Wert 0 stellt dabei das dominante Signal dar.

Zu Beginn jeder Kommunikation auf einem CAN-Bus muss ein sog. Interframe-Spacing eingehalten werden, eine Zeit, in welcher keine Kommunikation stattfinden darf. Danach folgt das Start of Frame Signal, welches den Beginn eines neuen Frames ankündigt. Anschließend werden die Bits übertragen, die dem hochprioren Teil der ID der Kommunikationsnachricht bzw. des Frames entsprechen. In dem hier gezeigten Beispiel wurden drei Bits gewählt. Anschließend werden die niederprioren Bits der ID, das control field und anschließend die Nutzdaten übertragen.

In dem linken Diagramm wird auf Kanal 1 das Start of Frame Signal empfangen, gleichzeitig wird es auf den anderen Kanälen ausgegeben. Anschließend überträgt der Sender auf Kanal 1 eine niederpriore ID, bei welcher das vierte Bit, also das erste niederpriore Bit, dominant ist. Dieses Bit wird ebenfalls an die weiteren Kanäle übermittelt. Das fünfte Bit der ID ist auf Kanal 1 rezessiv. Allerdings sendet ein Kommunikationspartner auf Kanal 3 ein dominantes fünftes Bit. Damit "gewinnt" dieser Kommunikationspartner die Arbitrierung und darf seine Nachricht übermitteln.

In dem rechten Diagramm wird erneut auf Kanal 1 ein Start of Frame Signal empfangen. Diesmal wird auch das erste Bit der ID, also das erste hochpriore Bit, dominant empfangen. Dies ist ein Zeichen dafür, dass eine hochpriore Nachricht empfangen wird. Es darf folglich keiner der auf Kanal 3 angeschlossenen Kommunikationspartner senden. Dies kann sicher unterbunden werden, indem das jeweilige Schaltelement (entsprechend dem Schaltelement 329 in den Trennelementen 326, 327, siehe Fig. 3) nach dem Start of Frame Bit geöffnet wird. Gleichzeitig können aber die auf Kanal 3 empfangenen Signale weiterhin überwacht werden.

In dem rechten Diagramm wird auf Kanal 3 an der Position des zweiten Bits der ID, also noch innerhalb der hochprioren IDs, ein dominantes Signal empfangen. Da dies nicht gestattet ist, kann ein Fehler erkannt werden und Kanal 3 einer entsprechenden Fehlerbehandlung unterzogen werden.

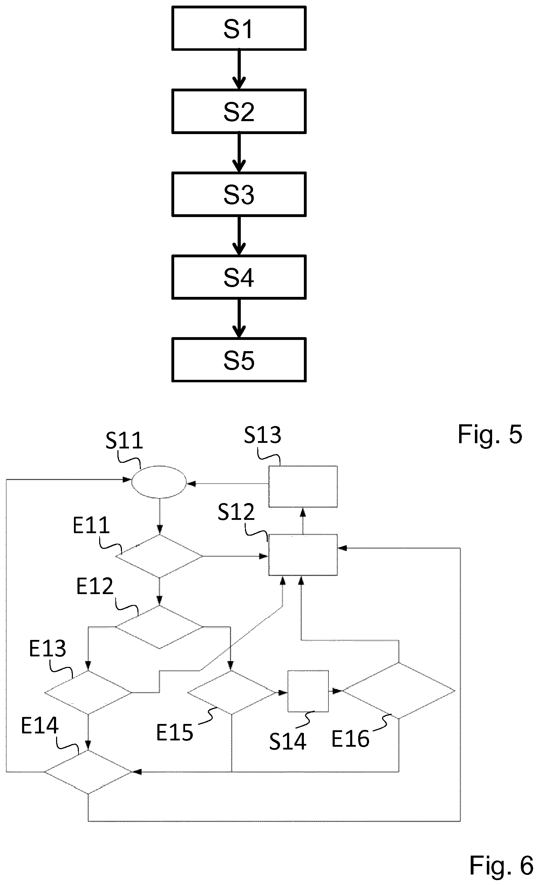

Figur 5 zeigt ein Ablaufdiagramm eines Verfahrens zur Kommunikation über eine Verteilervorrichtung 100, 300 in einem Datennetzwerk z.B. in einem Fahrzeug.

In einem ersten Schritt S1 des Kommunizierens wird mit Kommunikationspartnern 150, 151, 152, 153, 154, 155 einer ersten Priorität über eine Anzahl erster Kommunikationsschnittstellen 101, 102, 103 kommuniziert. In einem zweiten Schritt S2 des Kommunizierens wird mit Kommunikationspartnern 150, 151, 152, 153, 154, 155 einer zweiten Priorität über eine Anzahl zweiter Kommunikationsschnittstellen 104, 105, 106 kommuniziert, wobei die zweite Priorität niedriger ist, als die erste Priorität. In einem dritten Schritt S3 des Koppelns werden die ersten Kommunikationsschnittstellen 101, 102, 103 und die zweiten Kommunikationsschnittstellen 104, 105, 106 in kommunikativer Verbindung miteinander gekoppelt. In einem vierten Schritt S4 des Überwachens wird die Kommunikation über die zweiten Kommunikationsschnittstellen 104, 105, 106 überwacht. In einem fünften Schritt S5 des Isolierens werden bei Auftreten eines Kommunikationsfehlers an einer der zweiten Kommunikationsschnittstellen 104, 105, 106 zumindest die ersten Kommunikationsschnittstellen 101, 102, 103 von der entsprechenden zweiten Kommunikationsschnittstelle 104, 105, 106 isoliert. Es versteht sich, dass die Schritte S1 - S4 im Betrieb des Datennetzwerks permanent, also parallel und ohne Verzögerung oder Pufferung ausgeführt werden.

In der Verteilervorrichtung 100, 300 können Daten von über eine der ersten Kommunikationsschnittstellen 101, 102, 103 empfangenen Kommunikationsnachrichten in Kommunikationsnachrichten auf den weiteren ersten Kommunikationsschnittstellen 101, 102, 103 und den zweiten Kommunikationsschnittstellen 104, 105, 106 ausgegeben werden. Ebenso können in der Verteilervorrichtung 100, 300 Daten von über eine der zweiten Kommunikationsschnittstellen 104, 105, 106 empfangenen Kommunikationsnachrichten in Kommunikationsnachrichten auf den ersten Kommunikationsschnittstellen 101, 102, 103 und den weiteren zweiten Kommunikationsschnittstellen 104, 105, 106 ausgegeben werden.

Beim Ausgeben von Daten an einer der ersten Kommunikationsschnittstellen 101, 102, 103 oder einer der zweiten Kommunikationsschnittstellen 104, 105, 106 kann in der Verteilervorrichtung 100, 300 ferner geprüft werden, ob die an einen jeweiligen Transceiver 210, 320, 321, 322, 323 ausgegebenen Daten den auf einer jeweiligen Datenleitung 215 anliegenden Signalpegeln entsprechen. Die jeweilige Kommunikationsschnittstelle 101, 102, 103, 104, 105, 106 kann z.B. durch das Entkopplungselement 214 kommunikativ entkoppelt werden, wenn die an den jeweiligen Transceiver 210, 320, 321, 322, 323 ausgegebenen Daten nicht den auf der jeweiligen Datenleitung 215 anliegenden Signalpegeln entsprechen.

Beim Überwachen kann jeweils für über eine der ersten Kommunikationsschnittstellen 101, 102, 103 und/oder eine der zweiten Kommunikationsschnittstellen 104, 105, 106 empfangene Kommunikationsnachrichten geprüft werden, ob die jeweils empfangene Kommunikationsnachricht formal fehlerfrei ist und/oder ob die jeweils empfangene Kommunikationsnachricht eine für den jeweiligen Kommunikationspartner 150, 151, 152, 153, 154, 155 freigegebene Kennung aufweist und/oder ob die jeweils empfangene Kommunikationsnachricht eine vorgegebene Maximallänge nicht überschreitet. Selbstverständlich sind weitere Kriterien möglich.

Beim Empfangen einer Kommunikationsnachricht über eine der ersten Kommunikationsschnittstellen 101, 102, 103 kann geprüft werden, ob die empfangene Kommunikationsnachricht eine vorgegebene Nachrichtenpriorität aufweist. Wenn die empfangene Kommunikationsnachricht die vorgegebene Nachrichtenpriorität aufweist, kann ein Weiterleiten von Kommunikationsnachrichten von den zweiten Kommunikationsschnittstellen 104, 105, 106 für die Dauer der Übertragung der empfangenen Kommunikationsnachricht unterbunden werden. Insbesondere werden so Störungen durch Kommunikationspartner 153, 154, 155 an den zweiten Kommunikationsschnittstellen 104, 105, 106 vermieden.

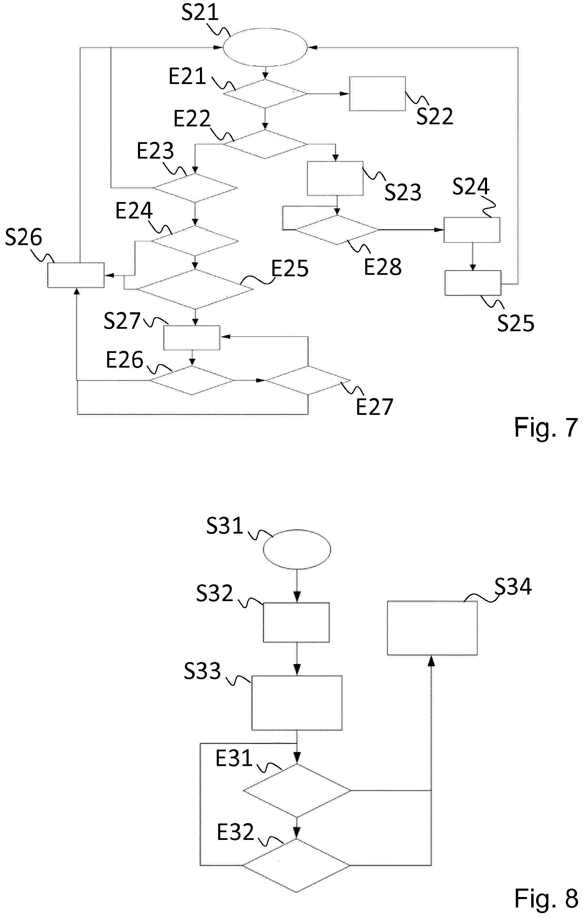

Figur 6 zeigt ein Ablaufdiagramm eines Überwachungsablaufs der z.B. in der Vermittlungseinheit 213 durchgeführt werden kann. In der Beschreibung zur Figur 6 und den folgenden Figuren 7 und 8 wird davon ausgegangen, dass in dem Datennetzwerk Signale mit einem "low" Pegel, also z.B. einer Spannung von 0 V dominant sind. Entsprechend sind Signale mit einem "high" Pegel, also z.B. einer Spannung von 3,3 V oder 5 V, rezessiv. Es versteht sich, dass auch andere Spannungen bzw. Logiken möglich sind, bei denen z.B. erfasst wird, ob das Kommunikationsmedium besetzt ist oder nicht. Das gesamte Verfahren kann dabei insbesondere parallel und ohne Verzögerung ablaufen.

Der Überwachungsablauf beginnt in Schritt S11, in welchem sich das Datennetzwerk in einem Ruhezustand befindet. Die interne Darstellung des Datennetzwerks, im Folgenden SP für Sternpunkt genannt, ist folglich rezessiv. Wechselt SP in einen dominanten Zustand, wird in Entscheidung E11 geprüft, ob der Beginn der empfangenen Kommunikationsnachricht formal korrekt ist. Ist dies nicht der Fall, wird zu Schritt S12 gesprungen und ein Fehlerzustand für die jeweilige Kommunikationsschnittstelle 101, 102, 103, 104, 105, 106 vermerkt. Ist die empfangenen Kommunikationsnachricht formal korrekt, wird in Entscheidung E12 geprüft, ob der Sender der Nachricht eine hohe oder eine niedrige Priorität aufweist, also ob die Kommunikationsnachricht an einer der ersten Kommunikationsschnittstellen 101, 102, 103 oder einer der zweiten Kommunikationsschnittstellen 104, 105, 106 empfangen wurde.

Wurde die Kommunikationsnachricht an einer der zweiten Kommunikationsschnittstellen 104, 105, 106 empfangen, wird in Entscheidung E13 geprüft, ob die empfangene Kommunikationsnachricht eine zulässige Kennung bzw. ID aufweist, also eine ID, welche eine niedrige Priorität kennzeichnet. Ist dies nicht der Fall, wird zu Schritt S12 gesprungen und ein Fehlerzustand für die jeweilige Kommunikationsschnittstelle 104, 105, 106 vermerkt. Ist dies der Fall, wird in Entscheidung E14 geprüft, ob die empfangene Kommunikationsnachricht eine zulässige Länge aufweist. Ist dies nicht der Fall, wird zu Schritt S12 gesprungen und ein Fehlerzustand für die jeweilige Kommunikationsschnittstelle 101, 102, 103 vermerkt. Weist die empfangene Kommunikationsnachricht eine zulässige Länge auf, wird kein Fehler vermerkt und das Weiterleiten der empfangenen Kommunikationsnachricht wird nicht unterbrochen.

Wird in Entscheidung E12 festgestellt, dass die Kommunikationsnachricht an einer der ersten Kommunikationsschnittstellen 101, 102, 103 empfangen wurde, wird in Entscheidung E15 geprüft, ob die empfangene Kommunikationsnachricht eine hochpriore Nachricht ist, also eine ID aufweist, welche die hohe Priorität kennzeichnet. Ist dies nicht der Fall, wird in Entscheidung E14 geprüft, ob die empfangene Kommunikationsnachricht eine zulässige Länge aufweist. Ist dies nicht der Fall, wird zu Schritt S12 gesprungen und ein Fehlerzustand für die jeweilige Kommunikationsschnittstelle 101, 102, 103 vermerkt. Ist dies der Fall, wird kein Fehler vermerkt und die empfangene Kommunikationsnachricht kann über die Vermittlungseinheit 213 weitergeleitet werden.

Wird in Entscheidung E15 festgestellt, dass die empfangene Kommunikationsnachricht eine hochpriore Nachricht ist, wird in Schritt S14 ein Flag für die Dauer der Übertragung der empfangenen Kommunikationsnachricht gesetzt. Dieses Flag kann z.B. genutzt werden, um für diese Dauer die Übertragung von Kommunikationsnachrichten mit niedriger Priorität zu blockieren.

In der optionalen Entscheidung E16 wird ferner während der Übertragung der empfangenen Kommunikationsnachricht geprüft, ob ein Kommunikationspartner mit niedriger Priorität versucht die Übertragung der Kommunikationsnachricht mit hoher Priorität zu stören. Ist dies der Fall, wird in Schritt S12 derjenige Kommunikationspartner mit niedriger Priorität als Fehlerhaft gekennzeichnet, ohne dass die Kommunikation der hochprioren Nachricht beeinträchtigt wird.

Wird der Schritt S12 erreicht, also ein Fehler erkannt, wird danach in Schritt S13 das Datennetzwerk synchronisiert. In einem CAN-Bus kann das z.B. durch das Aussenden eines sog. "Error Frame" geschehen.

Figur 7 zeigt ein Ablaufdiagramm eines Überwachungs- und Steuerablaufs der z.B. in der Schnittstellenlogik durchgeführt werden kann, um die Kommunikation zwischen Vermittlungseinheit und Transceiver zu überwachen.

Der Überwachungsablauf beginnt in Schritt S21, in welchem sich das Datennetzwerk in einem Ruhezustand befindet. Die interne Darstellung des Datennetzwerks, im Folgenden SP für Sternpunkt genannt, ist folglich rezessiv. Gleiches gilt für die TX und RX Anschlüsse des Transceivers. Findet eine Aktivität statt, ändert also SP, TX oder RX seinen Zustand, wird in Entscheidung E21 geprüft, ob für den jeweiligen Transceiver 210, 320, 321, 322, 323 bzw. die jeweilige Kommunikationsschnittstelle 101, 102, 103, 104, 105, 106 ein Fehler vermerkt ist. Ist dies der Fall, wird in Schritt S22 TX auf high, also rezessiv, gesetzt, RX und SP werden ebenfalls rezessiv gesetzt. Damit wird der jeweilige Transceiver 210, 320, 321, 322, 323 vom Rest des Datennetzwerks entkoppelt. Dieses Setzen von TX, RX und SP kann auch als Isolieren bzw. Entkoppeln durch das Trennelement 211, 324, 325, 326, 327 angesehen werden.

Ist für den jeweiligen Transceiver 210, 320, 321, 322, 323 bzw. die jeweilige Kommunikationsschnittstelle 101, 102, 103, 104, 105, 106 kein Fehler vermerkt, wird in Entscheidung E22 geprüft, ob SP einen "low" Zustand, also einen dominanten Zustand, hat. Ist dies der Fall, wird in Schritt S23 TX low gesetzt. Ferner kann in Schritt S23 z.B. RX für einen vorgegebenen Zeitraum in seinem momentanen Zustand blockiert werden, um ein Echo durch das geänderte TX Signal zu vermeiden. Durch Entscheidung E28 wird eine Schleife gebildet, die solange wiederholt wird, bis SP in einen "high" Zustand, also einen rezessiven Zustand, wechselt. Tritt dies ein, wird in Schritt S24 das TX Signal auf "high" gesetzt und in Schritt S25 die Blockade des TX Signals gelöst. Danach kehrt der Ablauf zu Schritt S21 zurück.

Wird in Entscheidung E22 festgestellt, dass SP nicht in einem dominanten Zustand ist, wird in Entscheidung E23 geprüft ob das RX Signal in einem dominanten Zustand, also "low", ist. Ist dies nicht der Fall, kehrt der Überwachungsablauf zu Schritt S21 zurück. Ist das RX Signal in einem dominanten Zustand, also "low", wird in Entscheidung E24 geprüft, ob für den jeweiligen Transceiver 210, 320, 321, 322, 323 bzw. die jeweilige Kommunikationsschnittstelle 101, 102, 103, 104, 105, 106 ein Fehler vermerkt ist. Ist dies der Fall, wird in Schritt S26 SP für den jeweiligen Transceiver 210, 320, 321, 322, 323 auf einen rezessiven Zustand gesetzt. Ist dies nicht der Fall, wird in Entscheidung E25 geprüft, ob der jeweilige Absender der empfangenen Kommunikationsnachricht eine Nachricht der entsprechenden Priorität senden darf. Es wird also geprüft, ob ein als niederprior gekennzeichneter Kommunikationspartner 153, 154, 155 eine hochpriore Nachricht versendet. Ist dies der Fall, wird zu Schritt S26 gesprungen. Ist dies nicht der Fall, wird in Schritt S27 das SP Signal in einem dominanten Zustand, also "low", versetzt.

Anschließend wird in Entscheidung E26 geprüft, ob RX in den rezessiven Zustand gewechselt hat. Ist dies nicht der Fall, wird in Entscheidung E27 geprüft, ob für den jeweiligen Transceiver 210, 320, 321, 322, 323 bzw. die jeweilige Kommunikationsschnittstelle 101, 102, 103, 104, 105, 106 inzwischen ein Fehler vermerkt ist, weil z.B. die zulässige Nachrichtenlänge überschritten wurde. Ist dies der Fall wird zu Schritt S26 gesprungen. Ist für den jeweiligen Transceiver 210, 320, 321, 322, 323 bzw. die jeweilige Kommunikationsschnittstelle 101, 102, 103, 104, 105, 106 kein Fehler vermerkt, wird zu Schritt S27 gesprungen. Hat in Entscheidung E26 RX in den rezessiven Zustand gewechselt, wird ebenfalls zu Schritt S27 gesprungen.

Figur 8 zeigt ein Ablaufdiagramm eines Überwachungs- und Steuerablaufs wie er ebenfalls z.B. in der Schnittstellenlogik durchgeführt werden kann. Der Überwachungsablauf der Figur 8 dient der Überwachung der Signalpegel und der Erkennung von Diskrepanzen zwischen Signalpegeln auf den Datenleitungen des Datennetzwerks und den Signalen TX und RX des Transceivers.

Der Überwachungsablauf beginnt mit Schritt S31. In Schritt S32 wird TX auf high gesetzt. Dies kann z.B. als Folge des Überwachungs- und Steuerablaufs der Figur 7 erfolgen. In Schritt S33 wird der Transceiver aktiv und setzt die entsprechenden Signalpegel auf den Datenleitungen des Datennetzwerks. In Entscheidung E31 wird geprüft, ob das RX Signal dem Signalpegel auf den Datenleitungen entspricht. Ist dies nicht der Fall wird in S34 der jeweilige Transceiver 210, 320, 321, 322, 323 isoliert und ein Fehlerzustand vermerkt.

Entspricht das RX Signal dem Signalpegel auf den Datenleitungen, wird in Entscheidung E32 geprüft, ob das TX Signal dem Signalpegel auf den Datenleitungen entspricht. Ist dies nicht der Fall wird in S34 der jeweilige Transceiver 210, 320, 321, 322, 323 isoliert und ein Fehlerzustand vermerkt. Ist dies der Fall, wird Entscheidung E31 angesprungen. Der Transceiver 210, 320, 321, 322, 323 kann z.B. auf Sternpunkt-Seite durch ein Trennelement 211, 324, 325, 326, 327 kommunikativ getrennt werden. Zusätzlich kann in einer Ausführungsform der Restbus an dem entsprechenden Transceiver 210, 320, 321, 322, 323 durch Öffnen eines Entkopplungselements 214 bzw. in dem Entkopplungselement 214 vorgesehener Schaltelemente von dem entsprechenden Transceiver 210, 320, 321, 322, 323 getrennt werden.

Da es sich bei der vorhergehend detailliert beschriebenen Vorrichtungen und Verfahren um Ausführungsbeispiele handelt, können sie in üblicher Weise vom Fachmann in einem weiten Umfang modifiziert werden, ohne den Bereich der Erfindung zu verlassen. Insbesondere sind die mechanischen Anordnungen und die Größenverhältnisse der einzelnen Elemente zueinander lediglich beispielhaft. Ferner können Ablaufdiagramme erweitert oder zusammengefasst werden, Signalpegel können umgedreht oder verändert werden und die Logik kann an andere Übertragungsarten und -Medien angepasst werden.

### BEZUGSZEICHENLISTE

- 100,300: Verteilervorrichtung
- 101, 102, 103: erste Kommunikationsschnittstelle
- 104, 105, 106: zweite Kommunikationsschnittstelle

- 107, 207, 307: Koppeleinrichtung
- 108,208: Überwachungseinrichtung

- 210: Transceiver
- 211: Trennelement
- 212: Schnittstellenlogik
- 213: Vermittlungseinheit
- 214: Entkopplungselement
- 215: Datenleitung
- 216: Abschlusswiderstand

- TX: Sendeleitung
- RX: Empfangsleitung

- 320, 321, 322, 323: Transceiver
- 324, 325, 326, 327: Trennelement
- 328, 329: Schaltelement
- 330: Signalleitung
- 331: Widerstand
- 332: Spannungsversorgung
- 333: Diode
- 334, 335: Schnittstellenlogikeinheit

- TX: Sendesignal
- RX: Empfangssignal
- CANH, CANL: Datenleitung

- 150, 151, 152, 153, 154, 155: Kommunikationspartner

- S1, S2, S3, S4, S5: Verfahrensschritt
- S11 -S14, S21 - S28, S31 - S34: Verfahrensschritt
- E11 - E16, E21 - E28, E31, E32: Entscheidung

## Patentansprüche

1. Verteilervorrichtung (100, 300) für ein Datennetzwerk in einem Fahrzeug, aufweisend:
eine Anzahl erster Kommunikationsschnittstellen (101, 102, 103), welche mit Kommunikationspartnern (150, 151, 152, 153, 154, 155) einer ersten Priorität koppelbar sind,
eine Anzahl zweiter Kommunikationsschnittstellen (104, 105, 106), welche mit Kommunikationspartnern (150, 151, 152, 153, 154, 155) einer zweiten Priorität koppelbar sind, wobei die zweite Priorität niedriger ist, als die erste Priorität,
eine Koppeleinrichtung (107, 207, 307), welche ausgebildet ist, die ersten Kommunikationsschnittstellen (101, 102, 103) und die zweiten Kommunikationsschnittstellen (104, 105, 106) kommunikativ miteinander zu koppeln, und
eine Überwachungseinrichtung (108, 208), welche ausgebildet ist, die Kommunikation über die zweiten Kommunikationsschnittstellen (104, 105, 106) zu überwachen und bei Auftreten eines Kommunikationsfehlers an einer der zweiten Kommunikationsschnittstellen (104, 105, 106) zumindest die ersten Kommunikationsschnittstellen (101, 102, 103) von der entsprechenden zweiten Kommunikationsschnittstelle (104, 105, 106) kommunikativ zu trennen, **dadurch gekennzeichnet, dass** die Koppeleinrichtung (107, 207, 307) eine Vermittlungseinheit (213) aufweist, welche mit den ersten Kommunikationsschnittstellen (101, 102, 103) und den zweiten Kommunikationsschnittstellen (104, 105, 106) gekoppelt ist, wobei jede der ersten Kommunikationsschnittstellen (101, 102, 103) und jede der zweiten Kommunikationsschnittstellen (104, 105, 106) einen Transceiver (210, 320, 321, 322, 323) aufweist, welcher mit der Vermittlungseinheit (213) gekoppelt ist, und wobei die Vermittlungseinheit (213) ausgebildet ist, Daten von über die ersten Kommunikationsschnittstellen (101, 102, 103) empfangenen Kommunikationsnachrichten in Kommunikationsnachrichten auf den ersten Kommunikationsschnittstellen (101, 102, 103) und den zweiten Kommunikationsschnittstellen (104, 105, 106) auszugeben und Daten von über die zweiten Kommunikationsschnittstellen (104, 105, 106) empfangenen Kommunikationsnachrichten in Kommunikationsnachrichten auf den ersten Kommunikationsschnittstellen (101, 102, 103) und den zweiten Kommunikationsschnittstellen (104, 105, 106) auszugeben, und
wobei die Überwachungseinrichtung (108, 208) ausgebildet ist, beim Ausgeben von Daten an einer der ersten Kommunikationsschnittstellen (101, 102, 103) oder einer der zweiten Kommunikationsschnittstellen (104, 105, 106) zu prüfen, ob die an den jeweiligen Transceiver (210, 320, 321, 322, 323) ausgegebenen Daten den auf der jeweiligen Datenleitung (215) anliegenden Signalpegeln entsprechen, und wobei die Überwachungseinrichtung (108, 208) ausgebildet ist, die jeweilige Kommunikationsschnittstelle (101, 102, 103, 104, 105, 106) kommunikativ zu trennen, wenn die von der Koppeleinrichtung (107, 207, 307) an den jeweiligen Transceiver (210, 320, 321, 322, 323) ausgegebenen Daten nicht den auf der jeweiligen Datenleitung (215) anliegenden Signalpegeln entsprechen und/oder die von dem jeweiligen Transceiver (210, 320, 321, 322, 323) auf der Datenleitung (215) eingelesenen Daten nicht den auf der jeweiligen Datenleitung (215) anliegenden Signalpegeln entsprechen.

2. Verteilervorrichtung (100, 300) nach Anspruch 1, wobei zwischen mindestens einem der Transceiver (210, 320, 321, 322, 323) und der Vermittlungseinheit (213) oder dem entsprechenden Transceiver (210, 320, 321, 322, 323) und der entsprechenden Datenleitung (215) ein Entkopplungselement (214) angeordnet ist, welches ausgebildet ist, den jeweiligen Transceiver (210, 320, 321, 322, 323) von den Datenleitung (215) galvanisch zu entkoppeln und/oder gesteuert zu trennen.

3. Verteilervorrichtung (100, 300) nach einem der vorherigen Ansprüche, wobei die Überwachungseinrichtung (108, 208) ausgebildet ist, beim Überwachen von über eine der ersten Kommunikationsschnittstellen (101, 102, 103) und/oder eine der zweiten Kommunikationsschnittstellen (104, 105, 106) empfangene Kommunikationsnachrichten zu prüfen, ob die jeweils empfangene Kommunikationsnachricht formal fehlerfrei ist und/oder ob die jeweils empfangene Kommunikationsnachricht eine für den jeweiligen Kommunikationspartner (150, 151, 152, 153, 154, 155) freigegebene Kennung aufweist und/oder ob die jeweils empfangene Kommunikationsnachricht eine vorgegebene Maximallänge nicht überschreitet.

4. Verteilervorrichtung (100, 300) nach einem der vorherigen Ansprüche, wobei die Überwachungseinrichtung (108, 208) ausgebildet ist, beim Empfangen einer Kommunikationsnachricht über eine der ersten Kommunikationsschnittstellen (101, 102, 103) zu prüfen, ob die empfangene Kommunikationsnachricht eine vorgegebene Nachrichtenpriorität aufweist, und wenn die empfangene Kommunikationsnachricht die vorgegebene Nachrichtenpriorität aufweist, ein Weiterleiten von Kommunikationsnachrichten von den zweiten Kommunikationsschnittstellen (104, 105, 106) für die Dauer der Übertragung der empfangenen Kommunikationsnachricht zu unterbinden.

5. Verteilervorrichtung (100, 300) nach einem der vorherigen Ansprüche, aufweisend für jede der ersten Kommunikationsschnittstellen (101, 102, 103) und jede der zweiten Kommunikationsschnittstellen (104, 105, 106) ein Trennelement (211, 324, 325, 326, 327), welches ausgebildet ist, die jeweilige Kommunikationsschnittstelle (101, 102, 103, 104, 105, 106) gesteuert kommunikativ zu trennen, wobei die Überwachungseinrichtung (108, 208) ausgebildet ist, zum Trennen einer der ersten Kommunikationsschnittstellen (101, 102, 103) oder einer der zweiten Kommunikationsschnittstellen (104, 105, 106) das jeweilige Trennelement (211, 324, 325, 326, 327) entsprechend anzusteuern.

6. Verteilervorrichtung (100, 300) nach einem der vorherigen Ansprüche, wobei die Koppeleinrichtung (107, 207, 307) eine Signalleitung (330) aufweist, welche über einen Widerstand (331) mit einer Spannungsversorgung (332) gekoppelt ist, wobei die Signalleitung (330) über die Überwachungseinrichtung (108, 208) mit Sende-Eingängen der Kommunikationsschnittstellen (104, 105, 106) gekoppelt ist und wobei die Signalleitung (330) jeweils über eine Diode (333) in Durchlassrichtung mit Empfangs-Eingängen der Kommunikationsschnittstellen (104, 105, 106) gekoppelt ist.

7. Verfahren zur Kommunikation über eine Verteilervorrichtung (100, 300) in einem Datennetzwerk in einem Fahrzeug, aufweisend:
Kommunizieren (S1) mit Kommunikationspartnern (150, 151, 152, 153, 154, 155) einer ersten Priorität mit einer Anzahl erster Kommunikationsschnittstellen (101, 102, 103), Kommunizieren (S2) mit Kommunikationspartnern (150, 151, 152, 153, 154, 155) einer zweiten Priorität mit einer Anzahl zweiter Kommunikationsschnittstellen (104, 105, 106), wobei die zweite Priorität niedriger ist, als die erste Priorität,
Koppeln (S3) der ersten Kommunikationsschnittstellen (101, 102, 103) und der zweiten Kommunikationsschnittstellen (104, 105, 106) in kommunikativer Verbindung,
Überwachen (S4) der Kommunikation über die zweiten Kommunikationsschnittstellen (104, 105, 106), und
Trennen (S5) zumindest der ersten Kommunikationsschnittstellen (101, 102, 103) von der entsprechenden zweiten Kommunikationsschnittstelle (104, 105, 106), bei Auftreten eines Kommunikationsfehlers an einer der zweiten Kommunikationsschnittstellen (104, 105, 106), **dadurch gekennzeichnet, dass** Daten von über eine der ersten Kommunikationsschnittstellen (101, 102, 103) empfangenen Kommunikationsnachrichten in Kommunikationsnachrichten auf den weiteren ersten Kommunikationsschnittstellen (101, 102, 103) und den zweiten Kommunikationsschnittstellen (104, 105, 106) ausgegeben werden und Daten von über eine der zweiten Kommunikationsschnittstellen (104, 105, 106) empfangenen Kommunikationsnachrichten in Kommunikationsnachrichten auf den ersten Kommunikationsschnittstellen (101, 102, 103) und den weiteren zweiten Kommunikationsschnittstellen (104, 105, 106) ausgegeben werden, und wobei beim Ausgeben von Daten an einer der ersten Kommunikationsschnittstellen (101, 102, 103) oder einer der zweiten Kommunikationsschnittstellen (104, 105, 106) geprüft wird, ob die an einen jeweiligen Transceiver (210, 320, 321, 322, 323) ausgegebenen Daten den auf einer jeweiligen Datenleitung (215) anliegenden Signalpegeln entsprechen, und wobei die jeweilige Kommunikationsschnittstelle (101, 102, 103, 104, 105, 106) kommunikativ getrennt wird, wenn die an den jeweiligen Transceiver (210, 320, 321, 322, 323) ausgegebenen Daten nicht den auf der jeweiligen Datenleitung (215) anliegenden Signalpegeln entsprechen und/oder die von dem jeweiligen Transceiver (210, 320, 321, 322, 323) auf der Datenleitung (215) eingelesenen Daten nicht den auf der jeweiligen Datenleitung (215) anliegenden Signalpegeln entsprechen.

8. Verfahren nach Anspruch 7, wobei die ersten Kommunikationsschnittstellen (101, 102, 103) und/oder die zweiten Kommunikationsschnittstellen (104, 105, 106) galvanisch entkoppelt werden.

9. Verfahren nach Anspruch 7, wobei beim Überwachen für über eine der ersten Kommunikationsschnittstellen (101, 102, 103) und/oder eine der zweiten Kommunikationsschnittstellen (104, 105, 106) empfangene Kommunikationsnachrichten geprüft wird, ob die jeweils empfangene Kommunikationsnachricht formal fehlerfrei ist und/oder ob die jeweils empfangene Kommunikationsnachricht eine für den jeweiligen Kommunikationspartner (150, 151, 152, 153, 154, 155) freigegebene Kennung aufweist und/oder ob die jeweils empfangene Kommunikationsnachricht eine vorgegebene Maximallänge nicht überschreitet.

10. Verfahren nach einem der vorherigen Ansprüche 7 bis 9, wobei beim Empfangen einer Kommunikationsnachricht über eine der ersten Kommunikationsschnittstellen (101, 102, 103) geprüft wird, ob die empfangene Kommunikationsnachricht eine vorgegebene Nachrichtenpriorität aufweist, und wenn die empfangene Kommunikationsnachricht die vorgegebene Nachrichtenpriorität aufweist, ein Weiterleiten von Kommunikationsnachrichten von den zweiten Kommunikationsschnittstellen (104, 105, 106) für die Dauer der Übertragung der empfangenen Kommunikationsnachricht unterbunden wird.

11. Verfahren nach einem der vorherigen Ansprüche 7 bis 10, wobei zum Isolieren für jede der ersten Kommunikationsschnittstellen (101, 102, 103) und jede der zweiten Kommunikationsschnittstellen (104, 105, 106) ein Trennelement (211, 324, 325, 326, 327) entsprechend angesteuert wird.

## Claims

1. Distribution apparatus (100, 300) for a data network in a vehicle, comprising:
a number of first communication interfaces (101, 102, 103), which can be coupled to communication partners (150, 151, 152, 153, 154, 155) having a first priority, a number of second communication interfaces (104, 105, 106), which can be coupled to communication partners (150, 151, 152, 153, 154, 155) having a second priority, the second priority being lower than the first priority,
a coupling device (107, 207, 307), which is designed to communicatively couple the first communication interfaces (101, 102, 103) and the second communication interfaces (104, 105, 106) to one another, and
a monitoring device (108, 208), which is designed to monitor the communication via the second communication interfaces (104, 105, 106) and, if a communication error occurs on one of the second communication interfaces (104, 105, 106), to communicatively disconnect at least the first communication interfaces (101, 102, 103) from the applicable second communication interface (104, 105, 106),
**characterized in that**
the coupling device (107, 207, 307) has a switching unit (213) that is coupled to the first communication interfaces (101, 102, 103) and the second communication interfaces (104, 105, 106), wherein each of the first communication interfaces (101, 102, 103) and each of the second communication interfaces (104, 105, 106) has a transceiver (210, 320, 321, 322, 323) that is coupled to the switching unit (213), and wherein the switching unit (213) is designed to output data from communication messages received via the first communication interfaces (101, 102, 103) in communication messages on the first communication interfaces (101, 102, 103) and the second communication interfaces (104, 105, 106) and to output data from communication messages received via the second communication interfaces (104, 105, 106) in communication messages on the first communication interfaces (101, 102, 103) and the second communication interfaces (104, 105, 106), and
wherein the monitoring device (108, 208) is designed so as, when outputting data on one of the first communication interfaces (101, 102, 103) or one of the second communication interfaces (104, 105, 106), to check whether the data that are output to the respective transceiver (210, 320, 321, 322, 323) are consistent with the signal levels present on the respective data line (215), and wherein the monitoring device (108, 208) is designed to communicatively disconnect the respective communication interface (101, 102, 103, 104, 105, 106) if the data that are output by the coupling device (107, 207, 307) to the respective transceiver (210, 320, 321, 322, 323) are not consistent with the signal levels present on the respective data line (215) and/or the data that are read in by the respective transceiver (210, 320, 321, 322, 323) on the data line (215) are not consistent with the signal levels present on the respective data line (215).

2. Distribution apparatus (100, 300) according to Claim 1, wherein a decoupling element (214) is arranged between at least one of the transceivers (210, 320, 321, 322, 323) and the switching unit (213) or the applicable transceiver (210, 320, 321, 322, 323) and the applicable data line (215), said decoupling element being designed to galvanically decouple, and/or to disconnect in a controlled manner, the respective transceiver (210, 320, 321, 322, 323) from the data line (215).

3. Distribution apparatus (100, 300) according to either of the preceding claims, wherein the monitoring device (108, 208) is designed so as, when monitoring communication messages received via one of the first communication interfaces (101, 102, 103) and/or one of the second communication interfaces (104, 105, 106), to check whether the respective received communication message is formally error-free and/or whether the respective received communication message has an identifier that is approved for the respective communication partner (150, 151, 152, 153, 154, 155) and/or whether the respective received communication message does not exceed a predefined maximum length.

4. Distribution apparatus (100, 300) according to one of the preceding claims, wherein the monitoring device (108, 208) is designed so as, when receiving a communication message via one of the first communication interfaces (101, 102, 103), to check whether the received communication message has a predefined message priority, and, if the received communication message has the predefined message priority, to prevent forwarding of communication messages from the second communication interfaces (104, 105, 106) for the duration of the transmission of the received communication message.

5. Distribution apparatus (100, 300) according to one of the preceding claims, having a disconnecting element (211, 324, 325, 326, 327) for each of the first communication interfaces (101, 102, 103) and each of the second communication interfaces (104, 105, 106), said disconnecting element being designed to communicatively disconnect the respective communication interface (101, 102, 103, 104, 105, 106) in a controlled manner, wherein the monitoring device (108, 208) is designed to disconnect one of the first communication interfaces (101, 102, 103) or one of the second communication interfaces (104, 105, 106) by actuating the respective disconnecting element (211, 324, 325, 326, 327) accordingly.

6. Distribution apparatus (100, 300) according to one of the preceding claims, wherein the coupling device (107, 207, 307) has a signal line (330) that is coupled to a power supply (332) via a resistor (331), wherein the signal line (330) is coupled to send inputs of the communication interfaces (104, 105, 106) via the monitoring device (108, 208) and wherein the signal line (330) is coupled to receive inputs of each of the communication interfaces (104, 105, 106) via a diode (333) in the forward direction.

7. Method for communicating via a distribution arrangement (100, 300) in a data network in a vehicle, comprising:
communicating (S1) with communication partners (150, 151, 152, 153, 154, 155) having a first priority by using a number of first communication interfaces (101, 102, 103),
communicating (S2) with communication partners (150, 151, 152, 153, 154, 155) having a second priority by using a number of second communication interfaces (104, 105, 106), the second priority being lower than the first priority,
coupling (S3) the first communication interfaces (101, 102, 103) and the second communication interfaces (104, 105, 106) in a communicative connection,
monitoring (S4) the communication via the second communication interfaces (104, 105, 106), and
disconnecting (S5) at least the first communication interfaces (101, 102, 103) from the applicable second communication interface (104, 105, 106) if a communication error occurs on one of the second communication interfaces (104, 105, 106),
**characterized in that**
data from communication messages received via one of the first communication interfaces (101, 102, 103) are output in communication messages on the other first communication interfaces (101, 102, 103) and the second communication interfaces (104, 105, 106) and data from communication messages received via one of the second communication interfaces (104, 105, 106) are output in communication messages on the first communication interfaces (101, 102, 103) and the other second communication interfaces (104, 105, 106), and wherein
the output of data on one of the first communication interfaces (101, 102, 103) or one of the second communication interfaces (104, 105, 106) involves a check being carried out to ascertain whether the data that are output to a respective transceiver (210, 320, 321, 322, 323) are consistent with the signal levels present on a respective data line (215), and wherein
the respective communication interface (101, 102, 103, 104, 105, 106) is communicatively disconnected if the data that are output to the respective transceiver (210, 320, 321, 322, 323) are not consistent with the signal levels present on the respective data line (215) and/or the data that are read in by the respective transceiver (210, 320, 321, 322, 323) on the data line (215) are not consistent with the signal levels present on the respective data line (215).

8. Method according to Claim 7, wherein the first communication interfaces (101, 102, 103) and/or the second communication interfaces (104, 105, 106) are galvanically decoupled.

9. Method according to Claim 7, wherein the monitoring for communication messages received via one of the first communication interfaces (101, 102, 103) and/or one of the second communication interfaces (104, 105, 106) involves a check being carried out to ascertain whether the respective received communication message is formally error-free and/or whether the respective received communication message has an identifier that is approved for the respective communication partner (150, 151, 152, 153, 154, 155) and/or whether the respective received communication message does not exceed a predefined maximum length.

10. Method according to one of the preceding Claims 7 to 9, wherein the receiving of a communication message via one of the first communication interfaces (101, 102, 103) involves a check being carried out to ascertain whether the received communication message has a predefined message priority, and, if the received communication message has the predefined message priority, forwarding of communication messages from the second communication interfaces (104, 105, 106) being prevented for the duration of the transmission of the received communication message.

11. Method according to one of the preceding Claims 7 to 10, wherein each of the first communication interfaces (101, 102, 103) and each of the second communication interfaces (104, 105, 106) are isolated by actuating a disconnecting element (211, 324, 325, 326, 327) accordingly.

## Revendications

1. Dispositif distributeur (100, 300) pour un réseau de données dans un véhicule, présentant :
un certain nombre de premières interfaces de communication (101, 102, 103) qui peuvent être couplées avec des partenaires de communication (150, 151, 152, 153, 154, 155) d'une première priorité,
un certain nombre de deuxièmes interfaces de communication (104, 105, 106) qui peuvent être couplées avec des partenaires de communication (150, 151, 152, 153, 154, 155) d'une deuxième priorité, la deuxième priorité étant inférieure à la première priorité,
un dispositif de couplage (107, 207, 307) qui est réalisé pour coupler de manière communicative les premières interfaces de communication (101, 102, 103) et les deuxièmes interfaces de communication (104, 105, 106) les unes avec les autres, et
un dispositif de surveillance (108, 208) qui est réalisé pour surveiller la communication par l'intermédiaire des deuxièmes interfaces de communication (104, 105, 106), et en cas d'apparition d'une erreur de communication au niveau de l'une des deuxièmes interfaces de communication (104, 105, 106), pour séparer de manière communicative au moins les premières interfaces de communication (101, 102, 103) de la deuxième interface de communication (104, 105, 106) correspondante,
**caractérisé en ce que** le dispositif de couplage (107, 207, 307) présente une unité de commutation (213) qui est couplée avec les premières interfaces de communication (101, 102, 103) et les deuxièmes interfaces de communication (104, 105, 106), chacune des premières interfaces de communication (101, 102, 103) et chacune des deuxièmes interfaces de communication (104, 105, 106) présentant un émetteur-récepteur (210, 320, 321, 322, 323) qui est couplé avec l'unité de commutation (213), et l'unité de commutation (213) étant réalisée pour sortir des données provenant de messages de communication reçus par l'intermédiaire des premières interfaces de communication (101, 102, 103) dans des messages de communication sur les premières interfaces de communication (101, 102, 103) et les deuxièmes interfaces de communication (104, 105, 106) et pour sortir des données provenant de messages de communication reçus par l'intermédiaire des deuxièmes interfaces de communication (104, 105, 106) dans des messages de communication sur les premières interfaces de communication (101, 102, 103) et les deuxièmes interfaces de communication (104, 105, 106), et le dispositif de surveillance (108, 208) étant réalisé, lors de la sortie de données au niveau de l'une des premières interfaces de communication (101, 102, 103) ou d'une des deuxièmes interfaces de communication (104, 105, 106), pour vérifier si les données sorties à destination de l'émetteur-récepteur (210, 320, 321, 322, 323) respectif correspondent aux niveaux de signal appliqués sur la ligne de données (215) respective, et le dispositif de surveillance (108, 208) étant réalisé pour séparer de manière communicative l'interface de communication (101, 102, 103, 104, 105, 106) respective si les données sorties par le dispositif de couplage (107, 207, 307) à destination de l'émetteur-récepteur (210, 320, 321, 322, 323) respectif ne correspondent pas aux niveaux de signal appliqués sur la ligne de données (215) respective, et/ou si les données lues par l'émetteur-récepteur (210, 320, 321, 322, 323) respectif sur la ligne de données (215) ne correspondent pas aux niveaux de signal appliqués sur la ligne de données (215) respective.

2. Dispositif distributeur (100, 300) selon la revendication 1, dans lequel, entre au moins l'un des émetteurs-récepteurs (210, 320, 321, 322, 323) et l'unité de commutation (213) ou l'émetteur-récepteur (210, 320, 321, 322, 323) correspondant et la ligne de données (215) correspondante est disposé un élément de découplage (214) qui est réalisé pour découpler de manière galvanique et/ou commandée l'émetteur-récepteur (210, 320, 321, 322, 323) respectif de la ligne de données (215).

3. Dispositif distributeur (100, 300) selon l'une quelconque des revendications précédentes, dans lequel le dispositif de surveillance (108, 208) est réalisé, lors de la surveillance de messages de communication reçus par l'intermédiaire d'une des premières interfaces de communication (101, 102, 103) et/ou d'une des deuxièmes interfaces de communication (104, 105, 106), pour vérifier si le message de communication reçu respectivement est correct au niveau de la forme et/ou si le message de communication reçu respectivement présente un identifiant validé pour le partenaire de communication (150, 151, 152, 153, 154, 155) respectif, et/ou si le message de communication reçu respectivement ne dépasse pas une longueur maximale prédéfinie.

4. Dispositif distributeur (100, 300) selon l'une quelconque des revendications précédentes, dans lequel le dispositif de surveillance (108, 208) est réalisé, lors de la réception d'un message de communication par l'intermédiaire d'une des premières interfaces de communication (101, 102, 103), pour vérifier si le message de communication reçu présente une priorité de message prédéfinie, et si le message de communication reçu présente la priorité de message prédéfinie, pour interdire une retransmission de messages de communication provenant des deuxièmes interfaces de communication (104, 105, 106) pendant la durée de la transmission du message de communication reçu.

5. Dispositif distributeur (100, 300) selon l'une quelconque des revendications précédentes, présentant pour chacune des premières interfaces de communication (101, 102, 103) et chacune des deuxièmes interfaces de communication (104, 105, 106) un élément de séparation (211, 324, 325, 326, 327) qui est réalisé pour séparer de manière commandée la communication de l'interface de communication (101, 102, 103, 104, 105, 106) respective, le dispositif de surveillance (108, 208) étant réalisé pour piloter de façon correspondante l'élément de séparation (211, 324, 325, 326, 327) respectif afin de séparer l'une des premières interfaces de communication (101, 102, 103) ou l'une des deuxièmes interfaces de communication (104, 105, 106) .

6. Dispositif distributeur (100, 300) selon l'une quelconque des revendications précédentes, dans lequel le dispositif de couplage (107, 207, 307) présente une ligne de signal (330) qui est couplée avec une alimentation en tension (332) par l'intermédiaire d'une résistance (331), la ligne de signal (330) étant couplée avec des entrées d'émission des interfaces de communication (104, 105, 106) par l'intermédiaire du dispositif de surveillance (108, 208), et la ligne de signal (330) étant couplée respectivement avec des entrées de réception des interfaces de communication (104, 105, 106) par l'intermédiaire d'une diode (333) dans le sens de conduction.

7. Procédé de communication par un dispositif distributeur (100, 300) dans un réseau de données dans un véhicule, présentant les étapes consistant à :
communiquer (S1) avec des partenaires de communication (150, 151, 152, 153, 154, 155) d'une première priorité avec un certain nombre de premières interfaces de communication (101, 102, 103),
communiquer (S2) avec des partenaires de communication (150, 151, 152, 153, 154, 155) d'une deuxième priorité avec un certain nombre de deuxièmes interfaces de communication (104, 105, 106), la deuxième priorité étant inférieure à la première priorité,
coupler (S3) les premières interfaces de communication (101, 102, 103) et les deuxièmes interfaces de communication (104, 105, 106) en liaison communicative,
surveiller (S4) la communication par l'intermédiaire des deuxièmes interfaces de communication (104, 105, 106), et
séparer (S5) au moins les premières interfaces de communication (101, 102, 103) de la deuxième interface de communication (104, 105, 106) correspondante en cas d'apparition d'une erreur de communication au niveau de l'une des deuxièmes interfaces de communication (104, 105, 106),
**caractérisé en ce que** des données de messages de communication reçus par l'intermédiaire d'une des premières interfaces de communication (101, 102, 103) sont sorties dans des messages de communication sur les autres premières interfaces de communication (101, 102, 103) et les deuxièmes interfaces de communication (104, 105, 106), et des données de messages de communication reçus par l'intermédiaire d'une des deuxièmes interfaces de communication (104, 105, 106) sont sorties dans des messages de communication sur les premières interfaces de communication (101, 102, 103) et les autres deuxièmes interfaces de communication (104, 105, 106), et lors de la sortie de données au niveau de l'une des premières interfaces de communication (101, 102, 103) ou d'une des deuxièmes interfaces de communication (104, 105, 106), il est vérifié si les données sorties à destination d'un émetteur-récepteur (210, 320, 321, 322, 323) respectif correspondent aux niveaux de signal appliqués sur une ligne de données (215) respective, et l'interface de communication (101, 102, 103, 104, 105, 106) respective étant séparée de manière communicative si les données sorties à destination de l'émetteur-récepteur (210, 320, 321, 322, 323) respectif ne correspondent pas aux niveaux de signal appliqués sur la ligne de données (215) respective et/ou les données lues par l'émetteur-récepteur (210, 320, 321, 322, 323) respectif sur la ligne de données (215) ne correspondent pas aux niveaux de signal appliqués sur la ligne de données (215) respective.

8. Procédé selon la revendication 7, dans lequel les premières interfaces de communication (101, 102, 103) et/ou les deuxièmes interfaces de communication (104, 105, 106) sont découplées galvaniquement.

9. Procédé selon la revendication 7, dans lequel, lors de la surveillance de messages de communication reçus par l'intermédiaire d'une des premières interfaces de communication (101, 102, 103) et/ou d'une des deuxièmes interfaces de communication (104, 105, 106), il est vérifié si le message de communication reçu respectif est correct au niveau de la forme, et/ou si le message de communication reçu respectivement présente un identifiant validé pour le partenaire de communication (150, 151, 152, 153, 154, 155) respectif, et/ou si le message de communication reçu respectivement ne dépasse pas une longueur maximale prédéfinie.

10. Procédé selon l'une quelconque des revendications précédentes 7 à 9, dans lequel, lors de la réception d'un message de communication par l'intermédiaire d'une des premières interfaces de communication (101, 102, 103), il est vérifié si le message de communication reçu présente une priorité de message prédéfinie, et si le message de communication reçu présente la priorité de message prédéfinie, une retransmission de messages de communication provenant des deuxièmes interfaces de communication (104, 105, 106) est interdite pendant la durée de la transmission du message de communication reçu.

11. Procédé selon l'une quelconque des revendications précédentes 7 à 10, dans lequel, pour l'isolation, un élément de séparation (211, 324, 325, 326, 327) est piloté de manière correspondante pour chacune des premières interfaces de communication (101, 102, 103) et chacune des deuxièmes interfaces de communication (104, 105, 106).
